# EUROPÄISCHE PATENTSCHRIFT

(11) **EP 3 762 565 B1**
(45) Veröffentlichungstag und Bekanntmachung des Hinweises auf die Patenterteilung: **16.09.2026**
(21) Anmeldenummer: 19715369.5
(22) Anmeldetag: 06.03.2019
(51) Int. Cl.: E04G 11/48, E04G 17/16, E01D 21/00, E04G 13/06, E04G 5/06

(54) **ANORDNUNG MIT EINER STÜTZVORRICHTUNG FÜR DEN BAUBEREICH, TAKTSCHIEBEVORRICHTUNG UND VERFAHREN ZUM STÜTZEN EINES LASTELEMENTES DURCH EINE SOLCHE STÜTZVORRICHTUNG**
ARRANGEMENT WITH A SUPPORTING DEVICE FOR THE CONSTRUCTION INDUSTRY, INCREMENTAL LAUNCHING DEVICE AND METHOD FOR SUPPORTING A LOAD ELEMENT USING SUCH A SUPPORTING DEVICE
AGENCEMENT AVEC UN DISPOSITIF DE SOUTIEN POUR LE DOMAINE DE LA CONSTRUCTION, DISPOSITIF DE LANÇAGE INCRÉMENTAL ET PROCÉDÉ DESTINÉ À SOUTENIR UN ÉLÉMENT DE CHARGE PAR LE BIAIS D'UN TEL DISPOSITIF DE SOUTIEN

(30) Priorität: 09.03.2018 DE 102018203612
(43) Veröffentlichungstag der Anmeldung: 13.01.2021
(73) Patentinhaber: PERI GMBH, 89264 Weissenhorn (DE)
(72) Erfinder: STURM, Florian, 89299 Unterroth (DE)
(74) Vertreter: K & H Bonapat Patentanwälte Koch · von Behren & Partner mbB
(86) Internationale Anmeldenummer: PCT/DE2019/100201
(87) Internationale Veröffentlichungsnummer: WO 2019/170196

(56) Entgegenhaltungen:
- GB-A- 1 102 423
- GB-A- 2 344 609
- KR-A- 20070 001 483
- KR-A- 20070 001 483
- KR-A- 20070 001 483
- US-A- 1 580 243
- US-A- 1 580 243
- US-A- 2 564 935
- US-A- 2 564 935
- US-A- 3 797 793
- US-A- 3 797 793
- US-A- 5 755 981
- US-A- 5 755 981
- US-A- 5 865 410
- US-A- 5 865 410

## Beschreibung

Die Erfindung betrifft eine Anordnung mit einer Stützvorrichtung für den Baubereich, die ein Fixierelement, das ausgebildet ist, an einer Seitenwand, insbesondere Betonseitenwand, anzuliegen und an einem Fixierpunkt, insbesondere Ankerpunkt, der Seitenwand fixiert zu sein, und einen Ausleger umfasst, der mit dem Fixierelement verbunden ist. Weiter betrifft die Erfindung eine Anordnung aus zumindest zwei solcher in einer Verschieberichtung eines Lastelementes nebeneinander angeordneten Stützvorrichtungen, eine Taktschiebevorrichtung mit zumindest einer solchen Stützvorrichtung oder zumindest einer Anordnung aus zwei solcher Stützvorrichtungen und ein Verfahren zum Stützen des Lastelementes im Baubereich durch eine solche Stützvorrichtung.

Beim Taktschiebeverfahren, das beispielsweise im Brückenbau Anwendung findet, wird u.a. eine Deckenschalung von einem vorherigen Betoniertakt in einen nächsten Betoniertakt verzogen bzw. verschoben. Eine vorhandene Deckenschalung wird hierzu ausgeschalt, also von einem zum Betonieren erforderlichen Betonierniveau abgesenkt, horizontal verzogen bzw. verschoben in den nächsten Betoniertakt und anschließend auf das erforderliche Betonierniveau hochgedrückt bzw. angehoben und eingerichtet. Das Verschieben der Deckenschalung findet bekanntermaßen mithilfe von an einer betonierten Seitenwand montierten als Fahrbahnplattenkonsolen ausgebildeten Stützvorrichtungen statt.

Die Fahrbahnplattenkonsole wird an einem Ankerpunkt in der Betonseitenwand montiert und weist eine dreieckförmige Konstruktion mit drehbar miteinander verbundenen Trägerelementen auf. Wenn die Deckenschalung auf der Fahrbahnplattenkonsole beim Verschieben aufliegt, wirkt aufgrund von Reibung zwischen der Deckenschalung und der Fahrbahnplattenkonsole auf die Fahrbahnplattenkonsole eine Verschiebekraftkomponente in der Verschieberichtung der Deckenschalung, die zu einem Drehmoment auf die Fahrbahnplattenkonsole führt. Dieses Drehmoment kann eine Drehung der Fahrbahnplattenkonsole relativ zur Seitenwand verursachen, die ein Wegklappen oder Schwenken der Fahrbahnplattenkonsole um den Ankerpunkt zur Folge haben kann, was einen Totalausfall der weggeklappten oder geschwenkten Fahrbahnplattenkonsole verursachen kann und unbedingt vermieden werden muss.

Im Stand der Technik wird ein Wegklappen oder Schwenken der Fahrbahnplattenkonsole beim Verschieben der Deckenschalung vermieden, indem nebeneinanderliegende Fahrbahnplattenkonsolen mit Längsstreben miteinander verbunden werden, die parallel zueinander angeordnet und mit einer Querstrebe zur weiteren Versteifung versehen werden. Der Arbeitsaufwand zum Montieren und Demontieren der einen Gerüstrohrverband bildenden Streben ist allerdings nicht unerheblich. Speziell im Taktschiebeverfahren ist das Montieren bzw. Demontieren des Gerüstrohrverbandes beim Versetzen der Konsolen in den nächsten Betoniertakt aufwändig und bindet Arbeitszeit und Kosten in erheblichem Umfang. Eine solche Stützvorrichtung oder Fahrbahnplattenkonsole ist aus US5755981A bekannt.

Aufgabe der vorliegenden Erfindung ist es demgegenüber, eine Stützvorrichtung für den Baubereich bereitzustellen, mit der unter Vermeidung des beschriebenen Nachteils des Standes der Technik ein Aufwand zum Montieren bzw. Demontieren eines Gerüstrohrverbandes reduziert oder vermieden werden kann und somit ein Bauablauf vereinfacht und beschleunigt werden kann. Zudem soll die Stützvorrichtung im Vergleich zu einer herkömmlichen Stützvorrichtung inklusive Gerüstrohrverband kostenneutral und mit gleicher Effektivität des Vermeidens eines Wegklappens oder Schwenkens der Stützvorrichtung um den Ankerpunkt unter Last bereitgestellt werden.

Diese Aufgabe wird erfindungsgemäß durch Anordnung mit einer Stützvorrichtung für den Baubereich gemäß Anspruch 1, eine Anordnung aus zumindest zwei solcher in einer Verschieberichtung eines Lastelementes nebeneinander angeordneten Stützvorrichtungen gemäß Anspruch 16, eine Taktschiebevorrichtung gemäß Anspruch 17 - und ein Verfahren zum Stützen des Lastelementes im Baubereich durch eine solche Stützvorrichtung gemäß Anspruch 19 gelöst.

Die Unteransprüche geben bevorzugte Weiterbildungen wieder.

Die erfindungsgemäße Aufgabe wird somit gelöst durch eine Anordnung mit einer Stützvorrichtung für den Baubereich mit einem Fixierelement, das an einer Seitenwand, anliegt und an einem Fixierpunkt, insbesondere Ankerpunkt, der Seitenwand fixiert ist, mit einem Ausleger, der mit dem Fixierelement verbunden ist und im fixierten Zustand des Fixierelementes von der Seitenwand derart abragt, dass ein Lastelement auf einem Auflagepunkt eines Auflageelementes des Auslegers aufliegt, wobei das Lastelement in eine Verschieberichtung im Wesentlichen horizontal und parallel zur Seitenwand gegenüber dem Ausleger verschiebbar ist, und der bei Auflage des Lastelementes auf dem Auflageelement des Auslegers so mit dem Lastelement gekoppelt ist, dass auf den Ausleger aufgrund einer Verschiebung des Lastelementes eine Verschiebekraftkomponente in die Verschieberichtung wirkt, die zu einem Drehmoment auf den Ausleger mit einem Hebelarm führt, der von dem Fixierpunkt bis zu dem Auflagepunkt reicht, und mit zumindest einem Drehverminderungselement, das mit einem Ende mit dem Ausleger verbunden ist und ausgebildet ist, bei einer Verschiebung des auf dem Ausleger aufliegenden Lastelementes mit einem anderen Ende an der Seitenwand anzuliegen, um dem Drehmoment auf den Ausleger entgegenzuwirken. Von dem Ausleger steht also zumindest ein Drehverminderungselement derart in Richtung der Seitenwand ab, dass beim Verschieben des Lastelementes das der Seitenwand zugewandte Ende des Drehverminderungselementes an die Seitenwand gedrückt wird, wodurch das effektiv auf den Ausleger wirkende Drehmoment reduziert wird.

Die Stützvorrichtung kann als Konsole, insbesondere Fahrbahnplattenkonsole, die im Taktschiebeverfahren an einer Seitenwand eines Brückentrogs zur Stützung einer Deckenschalung als Lastelement eingesetzt werden kann, ausgebildet sein. Wenn das Drehverminderungselement einen Flansch zur Herstellung der Verbindung zu dem Ausleger als das eine Ende aufweist, der an einen bekannten Ausleger angeflanscht werden kann, ist es möglich, eine vorbekannte Stützvorrichtung, z. B. eine Fahrbahnplattenkonsole als dreieckförmige Stahlkonstruktion, durch Anbringung des Drehverminderungselementes in die erfindungsgemäße Stützvorrichtung umzuwandeln. Das eine Ende und/oder das andere Ende des Drehverminderungselementes kann / können jeweils als Endabschnitt oder Endbereich mit räumlicher Ausdehnung ausgebildet sein. Wenn die Stützvorrichtung als Konsole ausgebildet ist, können anstelle von Gerüstrohren an sich gegenüberliegenden Seiten des Konsolauslegers, z. B. im fixierten Zustand des Fixierelementes an der Seitenwand links und rechts des Konsolauslegers, in und entgegen der Verschieberichtung zwei Rohrprofile als Drehverminderungselemente fixiert sein, die sich direkt an der Seitenwand, die beispielsweise aus Beton hergestellt ist, abdrücken. Der Ausleger kann in einer Ebene im Wesentlichen senkrecht zur Verschieberichtung orientiert sein, so dass das Drehverminderungselement dazu führt, dass bei Verschiebung des Lastelementes der Ausleger seine Orientierung und damit seine Stützfunktion nicht verliert.

Speziell im Taktschiebeverfahren entfällt aufgrund des von der als Konsole ausgebildeten Stützvorrichtung umfassten Drehverminderungselementes das aufwändige Montieren bzw. Demontieren eines Gerüstrohrverbandes beim Versetzen der Konsolen in den nächsten Betoniertakt. Dadurch ergibt sich ein beschleunigter Bauablauf mit einem vereinfachten Versetzen der erfindungsgemäßen Konsolen ohne weiteren Montageaufwand Demontage und Montage des Gerüstrohrverbandes. Die Erfindung erlaubt auch eine kostenneutrale Lösung im Vergleich zu einer herkömmlichen Stützvorrichtung inklusive Gerüstrohrverband bei gleicher Effektivität des Vermeidens eines Wegklappens oder Schwenkens der Stützvorrichtung um den Fixier- oder Ankerpunkt unter Last, weil das Drehverminderungselement bei Ausführung als Rohrprofil nicht teurer oder sogar kostengünstiger hergestellt werden kann als ein Gerüstrohrverband bestehend aus zwei Längsstreben und einer Querstrebe inklusive Schellen zur Herstellung der Verbindung zu den vorbekannten Stützvorrichtungen/Konsolen. Dies trifft noch immer zu, wenn an zwei Stützvorrichtungen jeweils zwei Drehverminderungselemente in Form von Stützflügeln in und entgegen der Verschieberichtung montiert sind.

Die Stützvorrichtung kann bereits ohne Last relativ zu der Seitenwand vorgespannt sein, so dass das Drehverminderungselement stets an der Seitenwand anliegt, oder erst unter Last während einer Verschiebung des Lastelementes, beispielsweise einer Deckenschalung, an die Seitenwand gedrückt werden. In dem letzteren Fall steht das andere Ende des Drehverminderungselementes im fixierten Zustand des Fixierelementes ohne das sich gegenüber der Stützvorrichtung verschiebende Lastelement von der Seitenwand am einen Abstand, der z. B. ca. 1 cm, wenige Millimeter, ca. einen Millimeter oder weniger betragen kann, ab. Das andere Ende des Drehverminderungselementes kann, aber muss nicht in einer horizontalen Ebene des Auflageelementes angeordnet sein. Auch kann das Drehverminderungselement die Form eines langgestreckten Flügels aufweisen, wobei auch eine Bogenform oder andere gekrümmte Form, z.B. J- oder S-Form möglich ist.

Das Drehverminderungselement ist erfindungsgemäß mit dem Ausleger verbunden und nicht mit dem an der Seitenwand anliegenden Fixierelement im fixierten Zustand. Auf diese Weise kann die Verbindung zwischen dem Fixierelement und dem Ausleger, die drehbar ausgeführt sein kann, nicht zu einer Verringerung der dem Drehmoment auf den Ausleger entgegen gerichteten Wirkung des Drehverminderungselementes führen. Stattdessen greift das Drehverminderungselement genau an dem Ausleger der Stützvorrichtung an, in den das Drehmoment mit dem Hebelarm von dem Fixierpunkt zu dem Auflagepunkt eingeleitet wird.

Das Drehverminderungselement weist mit Vorteil eine Länge von dem einen Ende zu dem anderen Ende aufweist, die zumindest ausreicht, eine Drehung des Auslegers aufgrund des Drehmomentes auf den Ausleger derart zu vermindern, dass ein Wegklappen oder Wegschwenken des Auslegers um den Fixierpunkt ausgeschlossen ist. Eine Drehung des Auslegers aufgrund des an dem Ausleger angreifenden Drehmomentes ist also nicht ausgeschlossen. Die Drehung bei an der Seitenwand anliegendem Drehverminderungselement muss durch das Drehverminderungselement nur insoweit gestoppt oder vermieden werden, als das Wegklappen oder Wegschwenken des Auslegers um den Fixierpunkt die Stützfunktion der Stützvorrichtung, also die zu stützende Traglast und Traglastposition, beeinträchtigen kann. Z. B. kann die Länge ungefähr den Abstand eines der Seitenwand abgewandten Endes des Auslegers zu der Seitenwand betragen. Die Länge des Drehverminderungselementes kann auch ca. die halbe Länge des Fixierelementes betragen. Andere Dimensionierungen sind möglich.

Das Drehverminderungselement weist in einer vorteilhaften Ausführung eine Länge von dem einen Ende zu dem anderen Ende auf, die ausreicht, eine Drehung des Auslegers aufgrund des Drehmomentes auf den Ausleger derart zu vermindern, dass ein Wegklappen oder Wegschwenken des Auslegers um eine erste Schwenkachse, die senkrecht auf der Seitenwand steht und den Fixierpunkt umfasst und / oder um einer zweite Schwenkachse, die in einer Ebene der Seitenwand liegt und den Fixierpunkt umfasst, ausgeschlossen ist. Die ersten und zweiten Schwenkachsen sind die häufigsten Achsen, um die der Ausleger wegklappt oder wegschwenkt, um die Stützfunktion der Stützvorrichtung zu mindern.

Wenn das Drehverminderungselement als Stützflügel mit langgestreckter Form als Vollkörper oder Hohlkörper, insbesondere mit einem Rohrprofil, ausgebildet ist, ist die Herstellung des Drehverminderungselementes besonders einfach und günstig möglich. Bei Ausführung als Hohlkörper, insbesondere Rohrprofil, fällt zudem das Gewicht des Drehverminderungselement gegenüber einer Ausführung als Vollkörper geringer aus.

Mit Vorteil erstreckt sich im fixierten Zustand des Fixierelementes das Drehverminderungselement im Wesentlichen in Verschieberichtung von dem Ausleger weg und / oder ein weiteres Drehverminderungselement erstreckt sich in im Wesentlichen zu der Verschieberichtung entgegengesetzter Richtung von dem Ausleger weg. Das Gegendrehmoment mit einem Hebelarm, der an dem Anlagepunkt des anderen Endes des Drehverminderungselementes ansetzt und eine Länge von dem einen Ende zu dem anderen Ende aufweist, kann in diesem Fall mit einem kompakt und einfach aufgebauten Drehverminderungselement erzielt werden. Das Drehverminderungselement kann dem Drehmoment mit der Verschiebekraftkomponente des Lastelementes in Verschieberichtung besonders gut entgegenwirken, wenn eine Dreipunktauflage der Stützvorrichtung mit zwei anderen Enden des Drehverminderungselementes und des weiteren Drehverminderungselementes und dem Fixierpunkt an der Seitenwand aufgebaut wird. Bei Verbinden sowohl des Drehverminderungselementes als auch des weiteren Drehverminderungselementes an dem Ausleger kann zudem auf eine Modifikation der Stützverbindung durch Anbringung des weiteren Drehverminderungselementes verzichtet werden, wenn das Lastelement entgegen der Verschieberichtung verschoben wird.

im fixierten Zustand des Fixierelementes ist vorteilhafterweise das eine Ende des Drehverminderungselementes / weiteren Drehverminderungselementes mit einem der Seitenwand zugewandten Endabschnitt des Auslegers, insbesondere des Auflageelementes des Auslegers, verbunden, um eine Zugänglichkeit auf eine mit dem Ausleger verbundene Absenkvorrichtung im fixierten Zustand des Fixierelementes aufrechtzuerhalten.

Vorteilhafterweise weist im fixierten Zustand des Fixierelementes das Drehverminderungselement / weitere Drehverminderungselement an einer der Seitenwand zugewandten Seite des Drehverminderungselementes / weiteren Drehverminderungselementes eine Ausnehmung derart auf, dass ein Keil, insbesondere Holzkeil, zwischen dem Drehverminderungselement / weiteren Drehverminderungselement und der Seitenwand zumindest teilweise von der Ausnehmung geführt angeordnet werden kann, dass im fixierten Zustand des Fixierelementes der Keil an die Seitenwand gedrückt ist, um die Stützvorrichtung zur Erhöhung der Steifigkeit der Stützvorrichtung zu verspannen. Das Fixierelement, auch Wandschuh genannt, liegt z. B. mit seiner Anlagefläche vollständig an der Seitenwand aus Beton an. Wenn die Drehverminderungselemente in Form von in und entgegen der Verschieberichtung orientierten Stützflügeln bei ebener Seitenwand nicht betonberührend und vorgespannt sind, können die Keile in die Ausnehmungen jedes Stützflügels gesetzt und zwischen Seitenwand und Stützflügel eingeschlagen werden, um die gewünschte Vorspannung der Stützvorrichtung zu erreichen.

Das andere Ende des Drehverminderungselementes / weiteren Drehverminderungselementes in einer zu der Verschieberichtung senkrechten Ebene relativ zu einer der Seitenwand zugewandten Seite des Fixierelementes in Richtung der Seitenwand um eine Ausbuchtung hervorsteht derart, dass im fixierten Zustand des Fixierelementes die Ausbuchtung an die Seitenwand gedrückt ist und die Stützvorrichtung zur Erhöhung der Steifigkeit der Stützvorrichtung verspannt ist, wird die Steifigkeit der Stützvorrichtung bei Verschiebung des Lastelementes gegenüber einer verspannungsfreien Stützvorrichtung erhöht. Das Fixierelement liegt z. B. mit seiner Anlagefläche vollständig an der Seitenwand aus Beton an und die Drehverminderungselemente in Form von in und entgegen der Verschieberichtung orientierten Stützflügeln sind bei ebener Seitenwand betonberührend und vorgespannt.

Das Auflageelement des Auslegers ist im fixierten Zustand des Fixierelementes mit Vorteil um eine im Wesentlichen horizontale, im Wesentlichen parallel zu der Seitenwand verlaufende erste Drehachse drehbar mit dem Fixierelement verbunden. Bei unterschiedlichen positiven oder negativen Neigungswinkeln der Seitenwand zur Vertikalen, also Seitenwänden ohne Überhang (positiver Neigungswinkel), senkrecht zum Boden orientierten Seitenwänden (Neigungswinkel zur Vertikalen im Wesentlichen null Grad) oder Seitenwänden mit Überhang (negativer Neigungswinkel), kann das Auflageelement dann stets im Wesentlichen horizontal, also beispielsweise in einem Winkelbereich von +/- 10° um die Horizontale, ausgerichtet werden, um beispielsweise eine Rolle auf dem Auflageelement anzubringen, was eine Reibungskraft zwischen dem Auflageelement und dem Lastelement bei einer Verschiebung des Lastelementes reduziert. Eine geringere Reibung führt zu einem geringeren Drehmoment mit der Verschiebekraftkomponente auf den Ausleger. Das geringe Drehmoment führt dazu, dass das Drehverminderungselement kleiner und/oder weniger starr ausgelegt werden kann, was die Kosten zur Herstellung des Drehverminderungselementes reduziert.

Besonders vorteilhaft ist das andere Ende des Drehverminderungselementes / weiteren Drehverminderungselementes durch ein Anlageelement mit einer der Seitenwand zugewandten Anlagefläche im fixierten Zustand des Fixierelementes gebildet, wobei die Anlagefläche eine in einer zu der Verschieberichtung senkrechten Ebene in Richtung der Seitenwand derart konzentrisch zu der ersten Drehachse des Auflageelementes des Auslegers gekrümmt ist, dass bei horizontaler Ausrichtung des Auflageelementes des Auslegers und unterschiedlichen positiven oder negativen Neigungswinkeln der Seitenwand zur Vertikalen in einer zu der Verschieberichtung senkrechten Ebene die Seitenwand eine Tangente an die der Seitenwand zugewandte Anlagefläche bildet. Die derart gebogene Anlagefläche der beispielsweise als Stützflügel ausgebildeten Drehverminderungselemente konzentrisch zu der Drehachse des Konsolauslegers relativ zu dem Fixierelement ermöglicht ein sicheres Anliegen an der Seitenwand unabhängig vom eingestellten Neigungswinkel des Auflageelementes relativ zum Fixierelement zur im Wesentlichen horizontalen Ausrichtung des Auflageelementes, also beispielsweise in einem Winkelbereich von +/- 10° um die Horizontale. Wenn mehrere Stützvorrichtungen in einem Verband nebeneinander in Verschieberichtung angeordnet und miteinander verbunden werden, kann eine von der Neigung der Seitenwand unabhängige Verbandswirkung durch die erfindungsgemäße Krümmung der Anlagefläche bzw. Auflagekontur der z. B. als Stützflügel ausgebildeten Drehverminderungselemente erzielt werden, wobei sich Einzelkonsolen trotz wirksamer Abstützung mittels der Verbindung zu einer benachbarten Einzelkonsole nachstellen lassen. Die Konsolen können also trotz Verbindung, beispielsweise mit einem Gerüstrohr, verstellt werden. Die Konsolen können jedoch nur in einem geringen Maße verstellt werden, da eine Schelle zur Fixierung beispielsweise des Gerüstrohres zur Herstellung der Verbindung zwischen benachbarten Einzelkonsolen fest / starr an jeder der Konsolen angeschweißt ist.

Die Haftwirkung des Drehverminderungselementes relativ zur Seitenwand wird verbessert, wenn die Anlagefläche gezackt ausgebildet ist, insbesondere mit entlang der Verschieberichtung verlaufenden, in Richtung der Seitenwand orientierten Zacken bei einer Verschiebung des auf dem Ausleger aufliegenden Lastelementes, wobei die Zacken insbesondere ausgebildet sind, bei Anlage an der Seitenwand wie Spikes zu wirken. Wenn die Ausbuchtung durch die Zacken gebildet ist, also die gezackte Oberfläche der Anlagefläche im Übermaß ausgeführt ist, werden die als Stützflügel ausgebildeten Drehverminderungselemente zuverlässig beim Montieren der Stützvorrichtung an der Betonwand verspannt.

Das Anlageelement ist vorteilhafterweise im fixierten Zustand des Fixierelementes in einer zu der Verschieberichtung senkrechten Ebene horizontal verschiebbar mit dem Ausleger verbunden ist. Eine solche Verbindung erlaubt eine Anpassung des Abstandes des Anlageelementes zur Seitenwand bzw. des Grades der Verspannung der Stützvorrichtung bei an der Seitenwand anliegendem Anlageelement ohne verschobene Last im fixierten Zustand des Fixierelementes, also auch bei laufender Verwendung der Stützvorrichtung.

Der Ausleger kann neben dem Auflageelement ein erstes Stützelement umfassen, wobei das Auflageelement einenends um die erste Drehachse drehbar mit dem Fixierelement und anderenends im fixierten Zustand des Fixierelementes um eine im Wesentlichen horizontale, im Wesentlichen parallel zu der Seitenwand verlaufende zweite Drehachse drehbar mit dem ersten Stützelement verbunden ist, dessen der Seitenwand zugewandtes Ende im fixierten Zustand des Fixierelementes um eine im Wesentlichen horizontale, im Wesentlichen parallel zu der Seitenwand verlaufende dritte Drehachse drehbar mit dem Fixierelement verbunden ist. So kann die auf den Ausleger wirkende Gewichtskraft des Lastelementes von dem Ausleger nicht nur in den Fixierpunkt, sondern zusätzlich zu einem zweiten Krafteinleitungspunkt an der Seitenwand in die Seitenwand mittels des ersten Stützelementes eingeleitet werden. Eine solche Stützvorrichtung kann in einer Seitenansicht dreieckförmig ausgebildet sein und aus Stahl hergestellt sein.

Bei einer anderen Form der Stützvorrichtung kann das Auflageelement anderenends im fixierten Zustand des Fixierelementes um die im Wesentlichen horizontale, im Wesentlichen parallel zu der Seitenwand verlaufende zweite Drehachse drehbar mit einem zweiten Stützelement verbunden ist, dessen dem Auflageelement abgewandtes Ende über eine im Wesentlichen horizontale, im Wesentlichen parallel zu der Seitenwand verlaufende weitere Drehachse mit dem ersten Stützelement verbunden ist, wobei insbesondere ein drittes Stützelement einenends mit dem von dem Auflageelement abgewandten Ende des zweiten Stützelementes und anderenends mit der ersten Drehachse verbunden ist. Im fixierten Zustand des Fixierelementes wird durch das dritte Stützelement, dass beispielsweise die Form einer Strebe aufweist, eine Drehung des ersten Stützelementes und/oder des zweiten Stützelementes um die weitere Drehachse verhindert. Das Auflageelement, das zweite Stützelement und das dritte Stützelement bilden also eine starre Anordnung, wobei die im Wesentlichen horizontale Ausrichtung des Auflageelementes dann über eine Länge des ersten Stützelementes eingestellt werden kann. Diese Stützvorrichtung, die in einer Seitenansicht viereckförmig ausgebildet sein kann und aus Stahl hergestellt sein kann. wird insbesondere bei einer Seitenwand mit einem negativen Neigungswinkel zur Vertikalen, also einer überhängenden Seitenwand eingesetzt.

Wenn das erste Stützelement als Teleskop, insbesondere in Form einer Spindel oder einer Hubvorrichtung, derart ausgebildet ist, dass bei unterschiedlichen positiven oder negativen Neigungswinkeln der Seitenwand eine im Wesentlichen horizontale Ausrichtung, beispielsweise in einem Winkelbereich von +/- 10° um die Horizontale, des Auflageelementes des Auslegers gewährleistet ist, kann die Stützvorrichtung bei unterschiedlichen Neigungswinkeln der Seitenwand zur Vertikalen flexibel eingesetzt werden.

Von der Erfindung auch umfasst ist eine Anordnung aus zumindest zwei in der Verschieberichtung nebeneinander angeordneten erfindungsgemäßen Anordnungen mit Stützvorrichtungen, zumindest zwei in der Verschieberichtung nebeneinander angeordnete, jeweils das zweite und dritte Stützelement umfassende Stützvorrichtungen bei Fixierung des Fixierelementes an dem Fixierpunkt der einen negativen Neigungswinkel zur Vertikalen aufweisenden Seitenwand, wobei die Stützvorrichtungen jeweils als Fahrbahnplattenkonsolen ausgeführt sind, die eine Stützvorrichtung im fixierten Zustand des Fixierelementes ein / das sich im Wesentlichen in Verschieberichtung von dem Ausleger weg erstreckende Drehverminderungselement aufweist, die andere Stützvorrichtung im fixierten Zustand des Fixierelementes ein weiteres / das weitere sich in im Wesentlichen zu der Verschieberichtung entgegengesetzter Richtung von dem Ausleger weg erstreckende Drehverminderungselement aufweist, und die Stützvorrichtungen durch zumindest eine Längsstrebe miteinander verbunden sind. Diese Anordnung erlaubt ein Einleiten des Drehmomentes mit der Verschiebekraftkomponente auf den Ausleger der einen Stützvorrichtung in die andere Stützvorrichtung, so dass das sich in Verschieberichtung von dem Ausleger weg erstreckende Drehverminderungselement der einen Stützvorrichtung und das sich zu der Verschieberichtung in entgegengesetzter Richtung von dem Ausleger der anderen Stützvorrichtung weg erstreckende Drehverminderungselement für beide Stützvorrichtungen zusammenwirken. Auch kann eine herkömmliche Stützvorrichtung ohne Drehverminderungselement z. B. durch eine Längsstrebe mit der erfindungsgemäßen Stützvorrichtung verbunden werden, wobei das Drehverminderungselement auch einem auf den Ausleger der herkömmlichen Stützvorrichtung wirkenden Drehmoment unter Last entgegenwirkt.

In einer Ausführungsform der Erfindung umfasst eine Taktschiebevorrichtung zumindest eine erfindungsgemäße Anordnung mit einer Stützvorrichtung oder zumindest mit zwei Stützvorrichtungen und eine Deckenschalung mit einem Schalhautträgerelement, das zur Ausformung einer Unterseite einer Fahrbahnplatte ausgebildet ist, wobei die Stützvorrichtung als Fahrbahnplattenkonsole ausgeführt ist und an einem der Deckenschalung zugewandten Ende einen Stützkopf umfasst, wobei der Stützkopf mit dem mit dem Auflageelement des Auslegers verbunden ist und eine Rolle zur Anlage an einem Längsträger der Deckenschalung aufweist. Diese Taktschiebevorrichtung erlaubt unter Vermeidung des beschriebenen Nachteils des Standes der Technik, den Aufwand zum Montieren bzw. Demontieren eines Gerüstrohrverbandes zu reduzieren oder zu vermieden und somit den Bauablauf zu vereinfachen und zu beschleunigen.

Die Taktschiebevorrichtung ist mit Vorteil so ausgeführt, dass der Ausleger mit einer Absenkeinrichtung mit einem Hubkolben, einer Stützbasis und mit einer Arretiervorrichtung versehen ist, wobei der Hubkolben in der Stützbasis verschiebbar gelagert ist und von einer Einschalposition in eine Ausschalposition einschiebbar ist und mittels der Arretiervorrichtung in der herausgeschobenen Arbeitsposition arretierbar ist, wobei die Arretiervorrichtung mit einem Drehlager und einem Exzenterhebel versehen ist, wobei der Exzenterhebel in dem Drehlager drehbar befestigt ist und der Hubkolben und die Stützbasis in der Arbeitsposition (s.o.) über den Exzenterhebel gegeneinander abgestützt sind, und die Stützbasis und/oder der Hubkolben einenends den Stützkopf bilden. Ein einfaches und zuverlässiges Anheben auf ein Betonierniveau und Absenken relativ zu dem Betonierniveau zum Erreichen und Beibehalten einer Einschal- und Ausschalposition für die Stützvorrichtung unter Last ist so gewährleistet. Von der Erfindung auch umfasst ist ein Verfahren zum Stützen eines Lastelementes, insbesondere einer Deckenschalung beim Taktschiebeverfahren, im Baubereich durch eine Stützvorrichtung mit einem Fixierelement, einem Ausleger und zumindest einem Drehverminderungselement, bei dem das Fixierelement an eine Seitenwand, insbesondere Betonseitenwand angelegt wird und das Fixierelement an einem Fixierpunkt, insbesondere Ankerpunkt, der Seitenwand, fixiert wird, der Ausleger mit dem Fixierelement verbunden wird, der Ausleger von der Seitenwand abragend angeordnet wird, das Lastelement auf einen Auflagepunkt eines Auflageelementes des Auslegers aufgelegt wird, das Lastelement in eine Verschieberichtung im Wesentlichen parallel zur Seitenwand gegenüber dem Ausleger verschoben wird, der Ausleger so mit dem Lastelement gekoppelt wird, dass auf den Ausleger aufgrund einer Verschiebung des Lastelementes eine Verschiebekraftkomponente in die Verschieberichtung wirkt, die zu einem Drehmoment auf den Ausleger mit einem Hebelarm führt, der von dem Fixierpunkt bis zu dem Auflagepunkt reicht, ein Ende des Drehverminderungselementes mit dem Ausleger verbunden wird, und ein anderes Ende des Drehverminderungselementes an die Seitenwand angelegt wird, um dem Drehmoment auf den Ausleger entgegenzuwirken. Die Vorteile dieses erfindungsgemäßen Verfahrens entsprechen denjenigen, die bereits im Zusammenhang mit der erfindungsgemäßen Stützvorrichtung aufgeführt sind.

Da das Drehverminderungselement sich im Wesentlichen in der Verschieberichtung von dem Ausleger weg erstreckend und / oder ein weiteres Drehverminderungselement sich in im Wesentlichen zu der Verschieberichtung entgegengesetzter Richtung von dem Ausleger weg erstreckend mit dem Ausleger verbunden wird / werden, das andere Ende jeweils des Drehverminderungselementes und / oder des weiteren Drehverminderungselementes in einer zu der Verschieberichtung senkrechten Ebene relativ zu einer der Seitenwand zugewandten Seite des Fixierelementes in Richtung der Seitenwand um eine Ausbuchtung hervorstehend ausgebildet wird, das Fixierelement fixiert wird, und die Ausbuchtung / Ausbuchtungen an die Seitenwand gedrückt wird / werden, wird die Stützvorrichtung zur Erhöhung der Steifigkeit der Stützvorrichtung verspannt. Auf diese Weise wird die Steifigkeit der Stützvorrichtung bei Verschiebung des Lastelementes gegenüber einer verspannungsfreien Stützvorrichtung erhöht.

Wenn das Drehverminderungselement / weitere Drehverminderungselement an einer der Seitenwand zugewandten Seite des Drehverminderungselementes / weiteren Drehverminderungselementes mit einer Ausnehmung versehen wird, ein Keil, insbesondere Holzkeil, zwischen dem Drehverminderungselement / weiteren Drehverminderungselement und der Seitenwand zumindest teilweise von der Ausnehmung geführt angeordnet wird, und der Keil an die Seitenwand gedrückt wird, wird die Stützvorrichtung zur Erhöhung der Steifigkeit der Stützvorrichtung verspannt. Die Stützvorrichtung kann also alternativ oder zusätzlich zu der oben beschriebenen Ausbuchtung durch Einbringen des Keiles zwischen dem Drehverminderungselement und der Seitenwand und geführt durch die Ausnehmung verspannt werden.

Es zeigen:
- Fig. 1a: einen Teil einer Taktschiebevorrichtung mit unterhalb einer Fahrbahnplatte angeordneter Deckenschalung, einer Baustütze und einer als Fahrbahnplattenkonsole ausgebildeten und mit einer Absenkeinrichtung versehenen Stützvorrichtung gemäß einer nicht beanspruchten Variante in einer Seitenransicht,
- Fig. 1b: zwei der in Fig. 1 gezeigten, als Fahrbahnplattenkonsolen ausgebildeten Stützvorrichtungen gemäß einer nicht beanspruchten Variante, die mit Längsstreben miteinander verbunden sind, in räumlicher Außenansicht,
- Fig. 2: eine erfindungsgemäße, mit einem Keil verspannbare Stützvorrichtung mit einem sich im Wesentlichen in Verschieberichtung von einem Ausleger der Stützvorrichtung weg erstreckenden Drehverminderungselement und einem weiteren sich in im Wesentlichen zu der Verschieberichtung entgegengesetzter Richtung von dem Ausleger weg erstreckenden Drehverminderungselement in einer ersten Ausführungsform in räumlicher Außenansicht,
- Fig. 3: einen Ausschnitt der in Fig. 2 gezeigten erfindungsgemäßen Stützvorrichtung und vergrößert ein Anlageelement des Drehverminderungselementes jeweils in einer Seitenansicht,
- Fig. 4: drei als Fahrbahnplattenkonsolen ausgebildete erfindungsgemäße Stützvorrichtungen gemäß der in Fig. 2 gezeigten Stützvorrichtung nebeneinander in räumlicher Außenansicht,
- Fig. 5: eine erfindungsgemäße Anordnung mit einer Stützvorrichtung in einer zweiten Ausführungsform mit lediglich einem sich im Wesentlichen in Verschieberichtung von dem Ausleger der Stützvorrichtung weg erstreckenden Drehverminderungselement und eine erfindungsgemäße Stützvorrichtung in einer dritten Ausführungsform mit lediglich einem sich in im Wesentlichen zu der Verschieberichtung entgegengesetzter Richtung von dem Ausleger weg erstreckenden Drehverminderungselement, wobei die Stützvorrichtungen durch eine Längsstrebe miteinander verbunden sind, in räumlicher Außenansicht,
- Fig. 6a: eine erfindungsgemäße Anordnung mit einer Stützvorrichtung in einer vierten Ausführungsform mit lediglich einem sich im Wesentlichen in Verschieberichtung von dem Ausleger der Stützvorrichtung weg erstrecken Drehverminderungselement und eine erfindungsgemäße Stützvorrichtung in einer fünften Ausführungsform mit lediglich einem sich in im Wesentlichen zu der Verschieberichtung entgegengesetzter Richtung von dem Ausleger weg erstreckenden Drehverminderungselement, wobei die Stützvorrichtungen durch eine Längsstrebe miteinander verbunden sind, in räumlicher Außenansicht,
- Fig. 6b: die in Fig. 6a gezeigte erfindungsgemäße Anordnung mit einer Stützvorrichtung in der fünften Ausführungsform in einer Seitenansicht,
- Fig. 7: die in Fig. 4 gezeigten Absenkeinrichtungen jeweils mit einem auf das Betonierniveau angehobenen Stützkopf und einem relativ zu dem Betonierniveau abgesenktem Stützkopf entsprechend einer Einschal- und Ausschalposition der mit der jeweiligen Absenkeinrichtung versehenen erfindungsgemäßen Stützvorrichtung, und
- Fig. 8: eine der beiden in Fig. 3b gezeigten Absenkeinrichtungen ohne Rolle in einer Querschnittsansicht von vorn mit einem Schieber als Exzenterhebelhaltevorrichtung, wobei ein Hubkolben in ausgefahrener Einschalposition gezeigt ist.

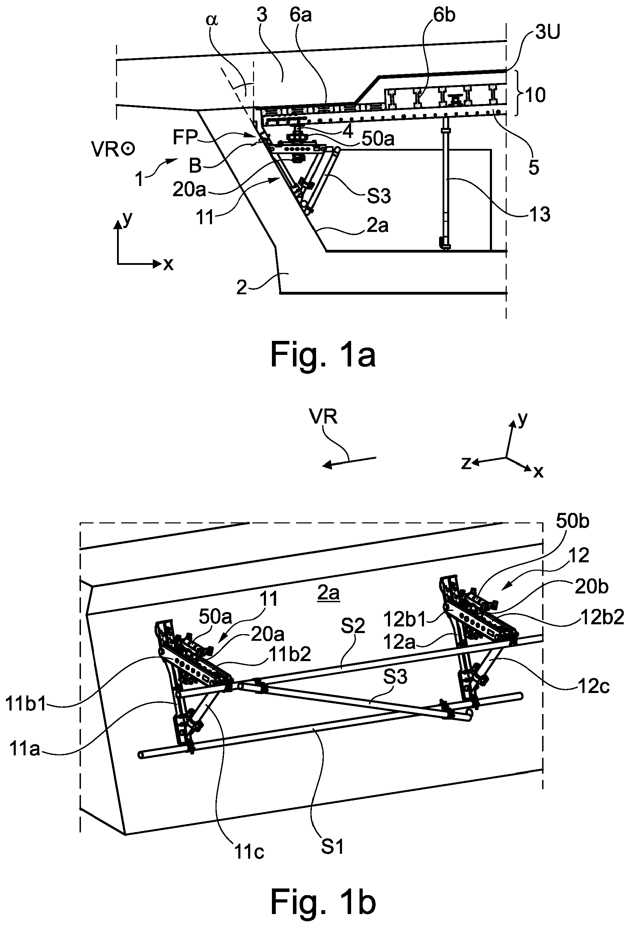

In Fig. 1a ist ein Teil einer Taktschiebevorrichtung mit unterhalb einer Fahrbahnplatte 3 angeordneter Deckenschalung 10, einer Baustütze 13 und einer als Fahrbahnplattenkonsole ausgebildeten und mit einer Absenkeinrichtung 20a versehenen Stützvorrichtung 11 gemäß einer nicht beanspruchten Variante in einer Seitenansicht gezeigt. Die Deckenschalung 10 weist einen ersten Längsträger, bzw. erstes Schalhautträgerelement 6a und einen zweiten Längsträger, bzw. zweites Schalhautträgerelement 6b auf, die zusammen eine Unterseite 3U der Fahrbahnplatte 3 ausformen. Die Deckenschalung 10 umfasst neben dem ersten Schalhautträgerelement 6a und dem zweiten Schalhautträgerelement 6b einen Querträger 5, auf dem die Längsträger ruhen, und ein Längsträgerelement 4 auf, auf dem der Querträger 5 angeordnet ist. Die Fahrbahnplatte 3 einer zu errichtenden Brücke 1 ruht auf einem Brückentrog 2 mit einer zur Vertikalen (in Y-Richtung) in einem Winkel α geneigten Seitenwand 2a. An der Seitenwand 2a ist eine Stützvorrichtung 11 gemäß einer nicht beanspruchten Variante über einen Fixierpunkt FP mit der Seitenwand 2a verbunden, wobei der Fixierpunkt FP durch einen Bolzen B gebildet ist, der im Wesentlichen senkrecht zur Seitenwand 2a in die Seitenwand 2 eingelassen ist und dessen der Seitenwand 2a zugewandtes Ende aus der Seitenwand 2a heraussteht, so dass die Stützvorrichtung 11 mit dem Ende des Bolzens B verbunden werden kann, um an dem Fixierpunkt FP fixiert zu sein.

Die Stützvorrichtung 11 weist horizontal (in X-Richtung) ein Trägerelement auf, mit dem eine Absenkeinrichtung 20a verbunden ist, wobei an einem der Deckenschalung 10 zugewandten Ende der Absenkeinrichtung 20a (in Y-Richtung) eine Rolle 50a angeordnet ist, auf der der Längsträger 4 ruht. Die Deckenschalung 10 als Lastelement ist in eine Verschieberichtung VR (aus der Blattebene heraus) gegenüber der Stützvorrichtung 20 verschiebbar. Das Bezugszeichen 10 wird im Folgenden sowohl für das Lastelement als auch für die Deckenschalung verwendet. Nachdem die Fahrbahnplatte 3 betoniert ist, wird die Baustütze 13 unterhalb des zweiten Schalhautträgerelementes 6b entfernt und die Stützvorrichtung 20 unterhalb des ersten Schalhautträgerelementes 6a wird von einer Einschalposition in eine Ausschalposition versetzt derart, dass die Deckenschalung in die negative Y-Richtung von einem Betonierniveau zur Betonierung der Unterseite 3U der Fahrbahnplatte 3 abgesenkt wird und in die Verschieberichtung VR in einen nächsten Betoniertakt verschoben wird. Die Einschalposition und die Ausschalposition der Stützvorrichtung 20 wird durch ein Verschieben der Rolle 50a mittels der Absenkeinrichtung 20a eingenommen und gehalten.

In Fig. 1b sind zwei nicht beanspruchte, als Fahrbahnplattenkonsolen ausgebildete Stützvorrichtungen 11, 12 gemäß der in Fig. 1a gezeigten Stützvorrichtung 11 gezeigt, die mit Längsstreben S1, S2 miteinander verbunden sind. Die Stützvorrichtung 11 weist ein an der Seitenwand 2a angebrachtes erstes Trägerelement 11a auf. An einem oberen Ende des ersten Trägerelementes 11a unterhalb des Fixierpunktes FP sind zweite Trägerelemente 11b1, 11b2 mit dem ersten Trägerelement 11a verbunden und horizontal (in X-Richtung) ausgerichtet. Zwischen den zweiten Trägerelementen 11b1, 11b2 ist die Absenkeinrichtung 20a angeordnet, wobei an einem oberen Ende der Absenkeinrichtung 20a in Y-Richtung die Rolle 50a zur Stützung des Längsträgers 4 der Deckenschalung 10 angeordnet ist. Ein drittes Trägerelement 11c verbindet ein unteres Ende des ersten Trägerelementes 11a mit einem von der Seitenwand 2a wegragenden Ende jeweils der zweiten Trägerelemente 11b1, 11b2. Die Stützvorrichtung 11 ist in einer X-/Y-Ebene orientiert, wobei bei einer Verschiebung der Deckenschalung der Längsträger 4 in die Verschieberichtung VR, die der Z-Richtung entspricht, auf der Rolle 50a aufliegt und eine Verschiebekraftkomponente in der Verschieberichtung VR, also senkrecht zur X-/Y-Ebene in die Stützvorrichtung einbringt.

Die zweite Stützvorrichtung 12 gemäß einer nicht beanspruchten Variante, die wegen der Seitenansicht in Fig. 1a nicht zu sehen ist, weist entsprechend der ersten Stützvorrichtung 11 ein erstes Trägerelement 12a, zweite Trägerelemente 12b1, 12b2 und ein drittes Trägerelement 12c auf, die jeweils an ihren Enden miteinander verbunden sind. Zwischen den zweiten Trägerelementen 12b1, 12b2 ist eine weitere Absenkeinrichtung 20b angeordnet, wobei eine zweite Rolle 50b an einem oberen Ende der zweiten Absenkeinrichtung 20b zur Auflage des Längsträgers 4 in Verschieberichtung VR beweglich angeordnet ist. Zur Erhöhung der Stabilität beider Stützvorrichtungen 11, 12 während einer Verschiebung der Deckenschalung 10 sind die von der Seitenwand 2a abragenden Enden der zweiten Trägerelemente 11b1, 11b2 und 12b1, 12b2 über die Längsstrebe S2 miteinander verbunden. Die unteren Enden der ersten Trägerelemente 11a, 12a sind mit der Längsstrebe S1 miteinander verbunden, wobei die Längsstreben S1 und S2 zueinander parallel orientiert sind. Zur weiteren Versteifung der Anordnung beider Stützvorrichtungen 11, 12 ist eine auch in Fig. 1a gezeigte Querstrebe S3 sowohl mit der Längsstrebe S1 als auch mit der Längsstrebe S2 derart verbunden, dass die Querstrebe S3 quer sowohl relativ zu der Längsstrebe S1 als auch zu der Längsstrebe S2 ausgerichtet ist.

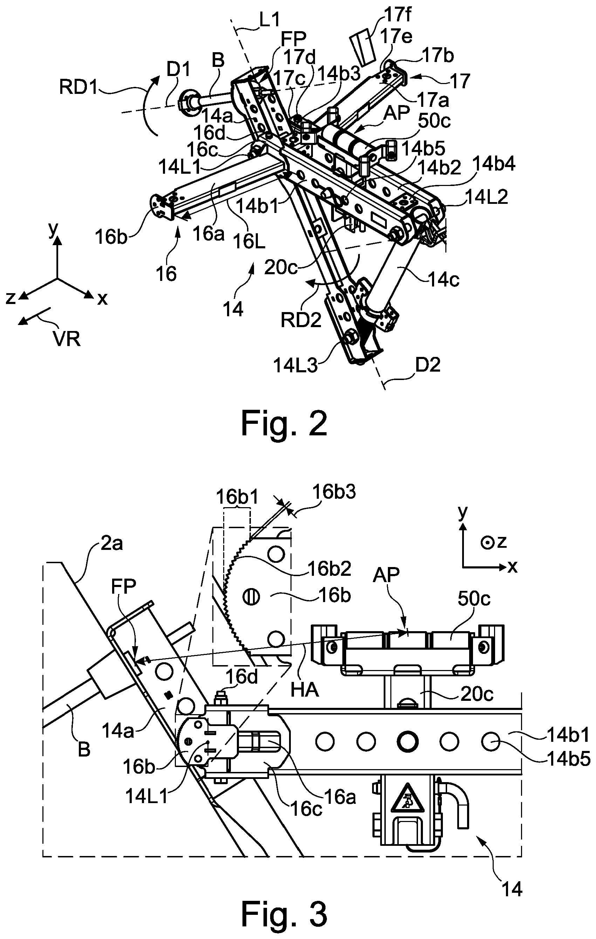

In Fig. 2 ist eine erfindungsgemäße Anordnung mit einer Stützvorrichtung 14 mit einem sich im Wesentlichen in der Verschieberichtung VR von einem Ausleger 14b1, 14b2, 14c der Stützvorrichtung 14 weg erstreckenden Drehverminderungselement 16 und einem weiteren sich in im Wesentlichen zu der Verschieberichtung VR entgegengesetzter Richtung an dem Ausleger 14b1, 14b2, 14c weg erstreckenden Drehverminderungselement 17 in einer ersten Ausführungsform in räumlicher Außenansicht gezeigt. Die Stützvorrichtung 14 umfasst ein Fixierelement 14a, das an der Seitenwand 2a ohne Überhang, also mit positivem Neigungswinkel gegenüber der Vertikalen, anliegt und an dem Fixierpunkt FP, der durch den von der Seitenwand 2a abstehenden Bolzen B als Ankerpunkt definiert ist, an der Seitenwand anliegend fixiert ist. Die Stützvorrichtung 14 umfasst weiter einen Ausleger 14b1, 14b2, 14c, der von dem Fixierelement absteht, mit dem Fixierelement 14a verbunden ist und im fixierten Zustand des Fixierelementes 14a von der Seitenwand 2a derart abragt, dass die Deckenschalung 10 als Lastelement auf einem Auflagepunkt AP eines Auflageelementes 14b1, 14b2 des Auslegers 14b1, 14b2, 14c aufliegen kann. Das Lastelement 10 in Form der Deckenschalung ist in die Verschieberichtung VR, die im Wesentlichen parallel zur Seitenwand 2a ausgerichtet ist, gegenüber dem Ausleger 14b1, 14b2, 14c über eine zwischen Auflagestreben 14b1, 14b2 des Auflageelementes angeordnete Absenkeinrichtung 20c und eine an einem Ende der Absenkeinrichtung 20c in Y-Richtung angeordnete Rolle 50c gegenüber dem Ausleger 14b1, 14b2, 14c und damit gegenüber der Stützvorrichtung 14 verschiebbar. Bei Auflage der Deckenschalung als Lastelement 10 auf dem Auflageelement in Form der Auflagestreben 14b1 und 14b2 ist der Ausleger 14b1, 14b2, 14c so mit dem Lastelement 10 gekoppelt, dass auf den Ausleger 14b1, 14b2, 14c aufgrund einer Verschiebung der Deckenschalung eine Verschiebekraftkomponente in die Verschieberichtung VR, also in Z-Richtung, wirkt, die zu einem Drehmoment auf den Ausleger 14b1, 14b2, 14c mit einem Hebelarm HA führt, der von dem Fixierpunkt FP bis zu dem Auflagepunkt AP reicht.

Eine erste Schwenkachse D1 wird durch eine Längsachse des Bolzens B definiert derart, dass das Fixierelement 14a um den Fixierpunkt FP herum entlang der Seitenwand 2a in Richtung RD1 verschoben wird, wenn die Deckenschalung 10 auf der Rolle 50c verschoben wird. Es ist auch möglich, dass, wenn das Eigengewicht der Deckenschalung 10 so groß ist, dass eine Drehbewegung in Richtung RD1 um den Fixierpunkt FP herum vermieden wird, der Ausleger 14b1, 14b2, 14c um eine Längsachse L1 des Fixierelementes 14a als zweite Schwenkachse D2 in Richtung RD2 gedreht wird, wenn die Deckenschalung 10 auf der Rolle 50c verschoben wird. Es kann auch der Fall eintreten, dass aufgrund des Drehmomentes auf den Ausleger 14b1, 14b2, 14c mit dem vom Fixierpunkt FP zu dem Auflagepunkt AP reichenden Hebelarm sowohl eine Drehung um die erste Schwenkachse D1 in Richtung RD1 als auch eine Drehung um die zweite Schwenkachse D2 in Richtung RD2 erfolgt. Die Auflagestreben 14b1 und 14b2 des Auflageelementes sind über Abstandselemente 14b3 und 14b4 miteinander verbunden derart, dass zwischen den Abstandselementen 14b3, 14b4 eine Absenkeinrichtung 20c zwischen den Auflagestreben 14b1 und 14b2 angeordnet ist. Die Absenkeinrichtung 20c ist durch einen Führungsbolzen, der durch Bolzendurchführungsbohrungen 14b5 verläuft, gegenüber den Auflagestreben 14b1, 14b2, die das Auflageelement bilden, fixiert. Die Abstandselemente 14b3, 14b4 befinden sich jeweils in von der Seitenwand 2a abgewandten und der Seitenwand 2a zugewandten Enden des Auflageelementes 14b1, 14b2. Bei dem Ausleger ist ein erstes Stützelement 14c mit dem Auflageelement 14b1, 14b2 drehbar über eine Drehachse 14L2 verbunden. Der Seitenwand 2a zugewandte Enden der Auflagestreben 14b1 und 14b2 sind mit dem Fixierelement 14a über eine weitere Drehachse 14L1 verbunden. Ein der Seitenwand 2a zugewandtes Ende des ersten Stützelementes 14c ist mit dem Fixierelement 14a über eine weitere Drehachse 14L3 drehbar verbunden. Die ersten bis dritten Drehachsen 14L1, 14L2 und 14L3 sind jeweils in Verschieberichtung VR, also Z-Richtung, orientiert.

Die Stützvorrichtung 14 umfasst weiter zumindest ein Drehverminderungselement 16, 17, das mit einem Ende mit dem Ausleger 14b1, 14b2, 14c verbunden ist und ausgebildet ist, bei einer Verschiebung des auf dem Ausleger 14b1, 14b2, 14c, genauer auf der Rolle 50c der Absenkvorrichtung 20c des Auflageelementes 14b1, 14b2 der Stützvorrichtung 14 aufliegenden Deckenschalung 10 mit einem anderen Ende an der Seitenwand 2a anzuliegen, um dem von der sich verschiebenden Deckenschalung auf den Ausleger 14b1, 14b2, 14c ausgeübten Drehmoment entgegenzuwirken. Das Drehverminderungselement 16 ist stützflügelartig geformt und weist eine Stützstrebe 16a, ein Anlageelement 16b und einen Flansch 16c auf. Das Drehverminderungselement 16 ist in im Wesentlichen zu der Verschieberichtung VR paralleler Richtung orientiert und erstreckt sich von der Auflagestrebe 14b1 in im Wesentlichen zu der Verschieberichtung VR paralleler Richtung von der Auflagestrebe 14b1 weg. Ein Ende des Drehverminderungselementes 16 wird durch den Flansch 16c gebildet, der über ein Verbindungsmittel 16d in Form einer in Y-Richtung orientierten Schraube mit dem Auflageelement 14b1, 14b2 an dessen der Seitenwand 2a zugewandten Endabschnitt verbunden ist. Das andere Ende des Drehverminderungselementes 16 wird durch das Anlageelement 16b gebildet, das bei einer Verschiebung des auf dem Ausleger 14b1, 14b2, 14c aufliegenden Lastelementes 10 in Form der Deckenschalung an der Seitenwand 2a anliegt, um dem von der sich verschiebenden Deckenschalung in den Ausleger 14b1, 14b2, 14c eingetragenen Drehmoment auf den Ausleger entgegenzuwirken. Das Drehverminderungselement 16 weist eine Länge 16L von dem einen durch den Flansch 16c gebildeten Ende zu dem anderen, durch das Anlageelement 16b gebildeten Ende auf, die ausreicht, eine Drehung des Auslegers 14b1, 14b2, 14c aufgrund des Drehmomentes auf den Ausleger bei einer Verschiebung der Deckenschalung gegenüber der Stützvorrichtung 14 in Verschieberichtung VR derart zu vermindern, dass ein Wegklappen oder Schwenken des Auslegers um den Fixierpunkt FP ausgeschlossen ist.

In sich im Wesentlichen zu der Verschieberichtung VR entgegengesetzter Richtung erstreckt sich von dem Ausleger 14b1, 14b2, 14c ein weiteres Drehverminderungselement 17 mit einer weiteren Stützstrebe 17a in Form eines Stützflügels, einem weiteren Flansch 17c und einem weiteren Anlageelement 17b derart, dass beide Drehverminderungselemente 16, 17 gegenüber der Längsachse L1 des Fixierelementes 14a achsensymmetrisch zueinander orientiert sind. Der Flansch 17c ist über ein weiteres Verbindungsmittel 17d in Form einer in Y-Richtung orientierten Schraube mit dem Auflageelement 14b1, 14b2 an dessen der Seitenwand 2a zugewandten Endabschnitt verbunden. Das weitere Drehverminderungselement 17 weist an einer der Seitenwand 2a zugewandten Seite im fixierten Zustand des Fixierelementes 14a eine Ausnehmung 17e in der Stützstrebe 17a auf (siehe bis zu einer gestrichelt dargestellten Linie ausgenommener Bereich in Fig. 2). Die Ausnehmung 17f, die an das weitere Anlageelement 17b angrenzen kann wie in Fig. 2 gezeigt, ist so ausgebildet, dass ein Keil 17f, der insbesondere als Holzkeil ausgeführt sein kann, zwischen dem weiteren Drehverminderungselement 17 und der Seitenwand 2a zumindest teilweise von der Ausnehmung 17e geführt angeordnet werden kann, so dass im fixierten Zustand des Fixierelementes 14a der Keil 17f an die Seitenwand 2a gedrückt ist, um die Stützvorrichtung 14 zur Erhöhung der Steifigkeit der Stützvorrichtung 14 zu verspannen. Eine Länge der Ausnehmung 17e in eine Richtung, die im Wesentlichen der Z-Richtung entspricht, kann zumindest einer Breite des Keils 17f in dieser Richtung entsprechen. Eine Breite der Ausnehmung 17e in im Wesentlichen negativer X-Richtung kann zumindest einer Tiefe einer schmalen Seite des Keils 17f, die einer weniger schmalen Seite des Keils 17f gegenüberliegt, entsprechen. Natürlich kann auch das erste Drehverminderungselement eine entsprechende Aufnahme für einen Keil aufweisen.

In Fig. 3 ist ein Ausschnitt der in Fig. 2 gezeigten Stützvorrichtung 14 und vergrößert das Anlageelement 16b des Drehverminderungselementes 16 jeweils in einer Seitenansicht gezeigt. Das Anlageelement 16b liegt an der Seitenwand 2a an, wobei die Deckenschalung 10, genauer gesagt der Längsträger 4 der Deckenschalung (nicht dargestellt), auf der Rolle 50c aufliegt. Das Anlageelement 16b ist über die Stützstrebe 16a mit dem Flansch 16c verbunden, der mittels der Schraubverbindung 16d mit der Auflagestrebe 14b1 des Auflageelementes, das aus den Auflagestreben 14b1 und 14b2 besteht, verbunden ist. Der Hebelarm HA während eines Verschiebens der Deckenschalung als Lastelement 10 führt von dem Fixierpunkt FP, der durch den aus der Seitenwand 2a herausragenden Bolzen B definiert wird, zu dem Auflagepunkt AP auf der Rolle 50c als Schwerpunkt des Lastelementes bei Auflage auf den Ausleger 14b1, 14b2, 14c.

An dem Auflagepunkt AP greift die Verschiebekraftkomponente der Deckenschalung 10 an, die durch eine Restreibung der Rolle 50c gegenüber der Deckenschalung 10 bei einer Verschiebung der Deckenschalung 10 als auf die auf den Ausleger übertragene Verschiebekraftkomponente entsteht. Diese Verschiebekraftkomponente der auf die Deckenschalung wirkenden Verschiebekraft wird von der Rolle 50c und der Absenkeinrichtung 20c als Teile der Stützvorrichtung 14 auf den Ausleger 14b1, 14b2, 14c übertragen. Bei einer zu der in Fig. 3 unterschiedlichen Positionierung der Absenkeinrichtung 20c mittels Verwendung einer anderen Bolzendurchführungsbohrung 14b5 kann der Hebelarm HA verkürzt oder verlängert werden.

Das Anlageelement 16b weist eine in Richtung der Seitenwand 2a gekrümmte Form in der X-/Y-Ebene als zu der Verschieberichtung VR senkrechte Ebene in Form einer Kalotte auf, wobei die Krümmung die Form eines Kreissegmentes mit einem Mittelpunkt aufweist, der konzentrisch zu der Drehachse 14L1 verläuft, über die das Auflageelement 14b1, 14b2 mit dem Fixierelement 14a verbunden ist. In Fig. 3 ist die Position der Drehachse 14L1 als Punkt ungefähr in der Mitte des Anlageelementes 16b dargestellt. Durch die Krümmung der Anlagefläche des Anlageelementes 16b an die Seitenwand 2a bei einer Verschiebung der Deckenschalung 10 gegenüber der Stützvorrichtung 14 in einer zu der Verschieberichtung VR senkrechten Ebene in Richtung der Seitenwand 2a konzentrisch zu der ersten Drehachse 14L1 des Auflageelementes 14b1, 14b2 des Auslegers kann bei horizontaler Ausrichtung des Auflageelementes 14b1, 14b2 und unterschiedlichen Neigungswinkeln α (siehe Fig. 1a) der Seitenwand 2a zur Vertikalen in einer zu der Verschieberichtung VR senkrechten Ebene die Seitenwand eine Tangente an die der Seitenwand 2a zugewandte Anlagefläche des Anlageelementes 16b bilden, wie dies in Fig. 3 gezeigt ist. Auf diese Weise kann bei unterschiedlichen Neigungswinkeln der Seitenwand die erfindungsgemäße Stützvorrichtung 14 bei stets horizontaler Ausrichtung des Auflageelementes 14b1 und 14b2 eine zuverlässige und konstante Funktion des Drehverminderungselementes 16 in Form eines Entgegenwirkens gegen das auf den Ausleger 14b1, 14b2, 14c ausgeübte Drehmoment sicherstellen.

Für eine hohe Haftung des Anlageelementes 16b an der Seitenwand 2a während einer Verschiebung der Deckenschalung 10 auf der Stützvorrichtung 14 weist die Anlagefläche des Anlageelementes 16b an die Seitenwand 2 in Verschieberichtung VR orientierte Zacken 16b2 auf, wobei die Zacken 16b2 ausgebildet sind, bei Anlage an die Seitenwand 2a wie Spikes zu wirken. Die Zacken 16b2 sind in einem als Kreissegment geformten gekrümmten Abschnitt 16b1 des Anlageelementes 16b vorhanden. In einer zu der Verschieberichtung VR senkrechten Ebene relativ zu der der Seitenwand 2a zugewandten Seite des Fixierelementes 14a in Richtung der Seitenwand 2a steht eine Ausbuchtung 16b3 derart hervor, dass im fixierten Zustand des Fixierelementes 14a die Ausbuchtung 16b3 an die Seitenwand 2a gedrückt wird und die Stützvorrichtung 14 zur Erhöhung von deren Steifigkeit verspannt wird. Die Ausbuchtung 16b3 ist nicht mit dem gekrümmten und mit Zacken 16b2 versehenen Abschnitt 16b1 zu verwechseln, sondern verläuft als Bereich einer gekrümmten Linie von den Spitzen der Zacken 16b2 in Richtung der Seitenwand 2a zu einer zu dieser Linie parallelen gekrümmten Linie der Furchen der Zacken 16b2 in zu der Seitenwand 2a abgewandter Richtung. Daher zeigt der vergrößerte Ausschnitt des Anlageelementes 16b nur den in Y-Richtung abschließenden Bereich der Ausbuchtung, der sich mit einer Höhe der Zacken 16b2 über den gesamten gekrümmten Abschnitt 16b1 der Anlagefläche des Anlageelementes 16b an die Seitenwand 2a erstreckt. Die in Fig. 3 gezeigten erfindungsgemäßen Merkmale des Drehverminderungselementes 16 treffen in entsprechender Weise auf das weitere Drehverminderungselement 17 zu, wie dies aus Fig. 2 und einer horizontalen Spiegelung der in Fig. 3 gezeigten Anordnung dem Fachmann offensichtlich ist.

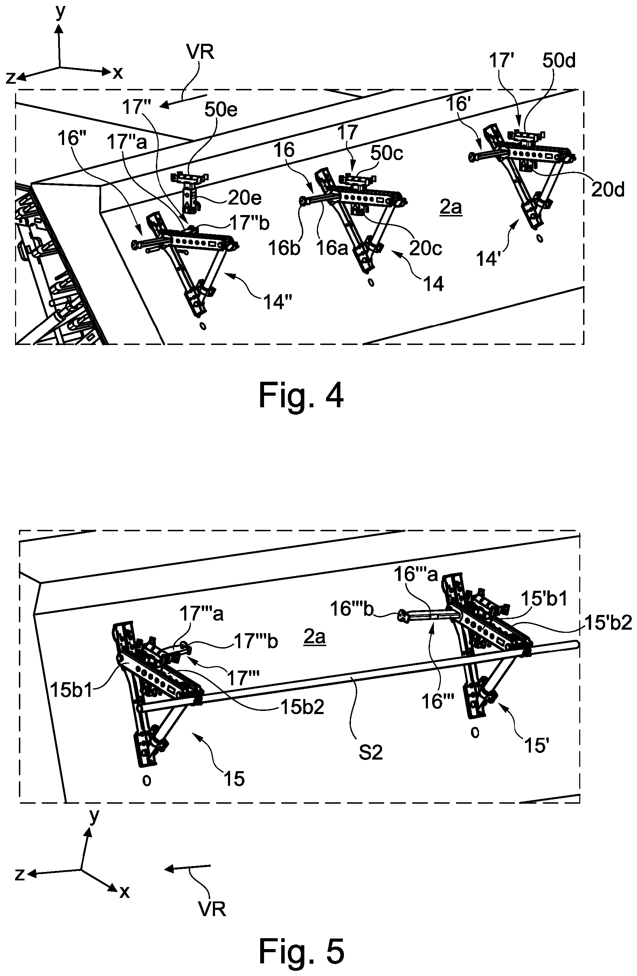

In Fig. 4 sind drei als Fahrbahnplattenkonsolen ausgebildete Stützvorrichtungen 14, 14', 14" gemäß der in Fig. 2 gezeigten Stützvorrichtung 14 in Verschieberichtung VR nebeneinander angeordnet in räumlicher Außenansicht dargestellt. Die Stützvorrichtung 14 ist an dem Fixierpunkt FP an der Seitenwand 2a anliegend mit dem Drehverminderungselement 16, umfassend die Stützstrebe 16a und das Anlageelement 16b, gezeigt. Das zweite Drehverminderungselement 17 ist aufgrund der Außenansicht von der Absenkeinrichtung 20c mit der Rolle 50c verdeckt. Bei entnommener Absenkeinrichtung 20e mit der Rolle 50e ist neben dem Drehverminderungselement 16" in im Wesentlichen zu der Verschieberichtung VR paralleler Richtung das weitere Drehverminderungselement 17" mit der weiteren Stützstrebe 17"a und dem weiteren Anlageelement 17"b bei der Stützvorrichtung 14" zu erkennen, die in Verschieberichtung VR neben der Stützvorrichtung 14 angeordnet ist.

Eine weitere Stützvorrichtung 14' mit dem weiteren Drehverminderungselement 16', Absenkeinrichtung 20d und Rolle 50d ist in zu der Verschieberichtung VR entgegengesetzter Richtung neben der Stützvorrichtung 14 derart angeordnet, dass in Verschieberichtung VR eine Deckenschalung 10 mit im Wesentlichen ebener Unterseite in Form des Längsträgers 4 auf den Rollen 50c, 50d und 50e gleichzeitig aufliegen kann, wenn die Deckenschalung relativ zu den Stützvorrichtungen 14, 14' und 14" in Verschieberichtung VR verschoben wird. Aufgrund des Entgegenwirkens der Drehverminderungselemente 16, 17, 16", 17", 16' gegen die Drehmomente, die jeweils auf die Stützvorrichtungen 14, 14', 14" aufgrund der Verschiebekraftkomponente in Verschieberichtung VR bei Verschieben der Deckenschalung 10 auf die Stützvorrichtungen 14 bis 14" ausgeübt werden, ist eine Verbindung dieser Stützverbindungen über Längs-/Querstreben S1 bis S3 nicht erforderlich. Stattdessen können die Stützvorrichtungen 14 bis 14" unabhängig voneinander dem auf sie wirkenden Drehmoment während eines Verschiebens der Deckenschalung 10 widerstehen, weshalb auf die in Fig. 1b gezeigten Längs- und Querstreben S1 bis S3 verzichtet werden kann, was den Bauablauf vereinfacht und beschleunigt.

In Fig. 5 ist eine Anordnung aus zwei Stützvorrichtungen 15, 15' gezeigt, die über die Längsstrebe S2 miteinander verbunden sind. Die Stützvorrichtung 15 weist lediglich ein sich in im Wesentlichen zu der Verschieberichtung VR entgegengesetzter Richtung von dem Ausleger 15b1, 15b2 weg erstreckendes Drehverminderungselement 17‴ mit der Stützstrebe 17‴a und dem Anlageelement 17‴b. Im Gegensatz dazu weist die Stützvorrichtung 15' lediglich ein sich im Wesentlichen in Verschieberichtung VR von dem Ausleger 15'b1, 15'b2 der Stützvorrichtung 15' weg erstreckendes Drehverminderungselement 16‴ mit der Stützstrebe 16‴a und dem Anlageelement 16‴b auf. Bei dieser Ausführungsform wird ein auf die Stützvorrichtung 15 wirkendes Drehmoment mit einer Verschiebekraftkomponente in Verschieberichtung VR mittels der Längsstrebe S2 auf die Stützvorrichtung 15' derart übertragen, dass das Drehverminderungselement 16‴b diesem Drehmoment, das nicht nur auf die Stützvorrichtung 15', sondern auch auf die Stützvorrichtung 15 wirkt, entgegenwirkt.

In entsprechender Weise wird ein auf die Stützvorrichtung 15' wirkendes Drehmoment mit einer Verschiebekraftkomponente in zu der Verschieberichtung VR entgegengesetzter Richtung über die Längsstrebe S2 an die Stützvorrichtung 15 übertragen, wobei das Drehverminderungselement 17‴ diesem auf die Stützvorrichtung 15' wirkenden Drehmoment entgegenwirkt. Durch die Verbindung des Auflageelementes 15b1, 15b2 mit der Längsstrebe S2 und der Verbindung der Längsstrebe S2 mit dem Auflageelement 15'b1, 15'b2 wird ein auf die jeweilige Stützvorrichtung 15 wirkendes Drehmoment mit einer Verschiebekraftkomponente in oder entgegen der Verschieberichtung VR jeweils auf die andere Stützvorrichtung 15, 15' derart übertragen, dass einem solchen Drehmoment durch ein oder mehrere Drehverminderungselemente an einer oder beiden der Stützvorrichtungen 15, 15' entgegengewirkt werden kann. Es ist daher auch möglich, dass die Stützvorrichtung 15 kein Drehverminderungselement umfasst und stattdessen die Stützvorrichtung 15' neben dem Drehverminderungselement 16‴ in sich im Wesentlichen zu der Verschieberichtung paralleler Richtung ein weiteres Drehverminderungselement (nicht dargestellt) in im Wesentlichen zu der Verschieberichtung VR entgegengesetzter Richtung umfasst, wie dies bei jeder der in Fig. 4 gezeigten Stützvorrichtungen 14, 14' und 14" der Fall ist. Durch die Verbindung beider Stützvorrichtungen 15, 15' durch die Längsstrebe S2 kann bei einem auf die Stützvorrichtung 15 wirkenden Drehmoment mit einer Verschiebekraftkomponente in oder entgegen der Verschieberichtung VR dieses Drehmoment von dem Drehverminderungselement 16‴ oder dem Drehverminderungselement 17 in zu der Verschieberichtung entgegengesetzter Richtung entgegengewirkt und das effektiv auf die Stützvorrichtung 15 wirkende Drehmoment wirksam reduziert werden.

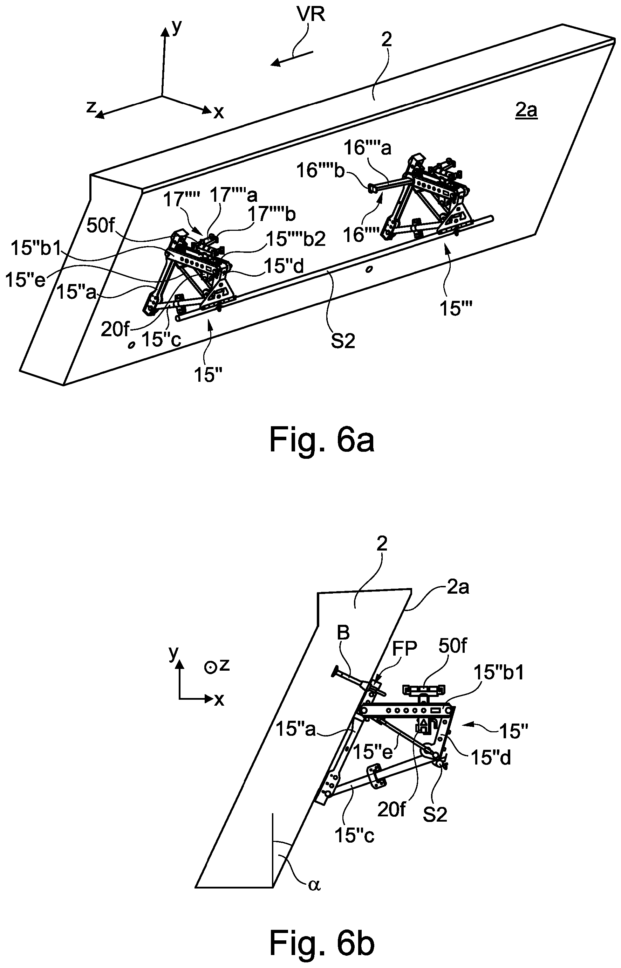

In Fig. 6a ist eine Stützvorrichtung 15‴ gemäß einer vierten Ausführungsform mit lediglich einem sich im Wesentlichen in Verschieberichtung VR von dem Ausleger der Stützvorrichtung 15‴ weg erstrecken Drehverminderungselement 16‴ und eine weitere erfindungsgemäße Stützvorrichtung 15" gemäß einer fünften Ausführungsform mit lediglich einem sich in im Wesentlichen zu der Verschieberichtung VR entgegengesetzter Richtung von dem Ausleger 15"b1, 15"b2, 15"c, 15"d, 15"e weg erstreckenden Drehverminderungselement 17ʺʺ in räumlicher Außenansicht gezeigt. Die Stützvorrichtungen 15" und 15‴ sind durch eine in Z-Richtung orientierte Längsstrebe S2 miteinander verbunden. Die Seitenwand 2a des Brückentrogs 2 weist einen negativen Neigungswinkel zur Vertikalen in Y-Richtung auf, wobei das Fixierelement der Stützvorrichtung 15‴ und das Fixierelement 15"a der Stützvorrichtung 15" an der überhängenden Seitenwand 2a anliegend fixiert sind. Das in entgegen der Verschieberichtung VR orientierte Drehverminderungselement 16‴ der Stützvorrichtung 15‴ weist eine Stützstrebe 16ʺʺa und ein an der Seitenwand 2a anliegendes Anlageelement 16ʺʺb auf.

Ein Auflageelement mit Auflagestreben 15"b1, 15"b2 ist an dessen der Seitenwand 2a zugewandtem Ende um eine im Wesentlichen horizontale, im Wesentlichen parallel zu der Seitenwand 2a verlaufende Drehachse drehbar mit dem Fixierelement 15"a verbunden. Ein der Seitenwand 2a abgewandtes Ende des Auflageelementes 15"b1, 15"b2 ist um eine im Wesentlichen horizontale, im Wesentlichen parallel zu der Seitenwand 2a verlaufende weitere Drehachse drehbar mit einem zweiten Stützelement 15"d verbunden. Ein dem Auflageelement 15"b1, 15"b2 abgewandtes Ende des zweiten Stützelementes 15"d ist über eine im Wesentlichen horizontale, im Wesentlichen parallel zu der Seitenwand 2a verlaufende weitere Drehachse mit einem ersten Stützelement 15"c verbunden. Ein drittes Stützelement 15"e in Form einer Strebe ist einenends mit dem von dem Auflageelement 15"b1, 15"b2 abgewandten Ende des zweiten Stützelementes 15"d und anderenends mit der Drehachse zur Verbindung des Fixierelementes 15"a mit dem Auflageelement 15"b1, 15"b2 verbunden. Das gegen die Verschieberichtung VR orientierte Drehverminderungselement 17ʺʺ der Stützvorrichtung 15" weist eine Stützstrebe 17ʺʺa und ein an der Seitenwand 2a anliegendes Anlageelement 17ʺʺb auf. Das Fixierelement 15"a liegt mit seiner Anlagefläche vollständig an der Seitenwand 2a, die in Fig. 6a aus Beton besteh, aber auch aus einem anderen Material hergestellt sein kann, an. Ebenso liegt das Fixierelement der Stützvorrichtung 15‴ mit seiner Anlagefläche vollständig an der Seitenwand 2a an. Die jeweils als Stützflügel ausgebildeten Drehverminderungselemente 16ʺʺ und 17ʺʺ liegen an der ebenen überhängenden Seitenwand 2a an und die Stützvorrichtung 15" und 15‴ sind so über die Längsstrebe S2 miteinander verbunden, dass die Drehverminderungselemente 16ʺʺ und 17ʺʺ an der überhängende Seitenwand 2a gedrückt werden und dadurch die Stützvorrichtungen 15" und 15‴ vorgespannt werden. Im vorgespannten Zustand übt die Stützvorrichtung 15" eine Zugkraft auf die Längsstrebe S2 in Z-Richtung und die Stützvorrichtung 15‴ eine andere Zugkraft mit einem zu der Zugkraft gleichen Betrag auf die Längsstrebe S2 in die negative Z-Richtung aus, so dass die Längsstrebe S2, die als Gerüstrohr ausgebildet sein kann, unter Zug steht. Zwischen den Auflagestreben 15"b1 und 15"b2 ist eine Absenkeinrichtung 20f angeordnet, an deren Stützkopf eine Rolle 50f mit einer Rollrichtung in Verschieberichtung VR angeordnet ist.

In Fig. 6b ist die in Fig. 6a gezeigte Stützvorrichtung 15" in einer Seitenansicht gezeigt. Der Neigungswinkel α nimmt negative Werte an, wie ein Vergleich zu Fig. 1a zeigt, in der der Neigungswinkel α positiv ist. Die in Fig. 6b gezeigte Seitenwand 2a befindet sich daher im Überhang. Das Fixierelement 15"a ist an dem durch eine Position des Bolzens B in der Seitenwand 2a definierten Fixierpunkt FP an der Seitenwand fixiert und liegt an der Seitenwand 2a mit Endabschnitten in Y-Richtung und in negativer Y-Richtung an. Das Drehverminderungselement 17ʺʺ wird von der Auflagestrebe 15"b1 des Auflageelementes 15"b1, 15"b2 überdeckt und ist daher in Fig. 6b nicht sichtbar. Wegen des Überhangs der Seitenwand 2a ist die Absenkeinrichtung 20f von einer in X-Richtung äußersten Bolzendurchführungsbohrung geführt, so dass eine auf der Rolle 5f aufliegende und in Z-Richtung verschobene Deckenschalung die Seitenwand 2a nicht berührt. Das zweite Stützelement 15"d dient als Verlängerung des Auflageelementes 15"b1, 15"b2 derart, dass das erste Stützelement 15"c dem in Fig. 2 gezeigten Stützelement 14c entsprechen kann, das von der Stützvorrichtung 14 umfasst ist, die an einer Seitenwand 2a ohne Überhang anliegt. Das Auflageelement 15"b1, 15"b2, das zweite Stützelement 15"d und das dritte Stützelement 15"e bilden eine starre Anordnung, wobei die im Wesentlichen horizontale Ausrichtung des Auflageelementes 15"b1, 15"b2 über eine Länge des ersten Stützelementes 15"c einstellbar ist.

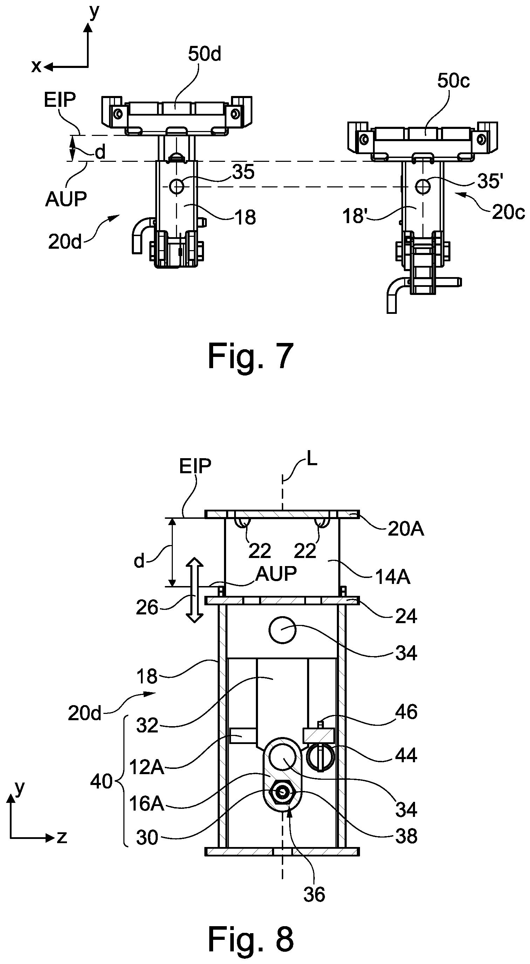

In Fig. 7 sind die in Fig. 4 gezeigten Absenkeinrichtungen 20c, 20d jeweils in der Einschalposition EIP mit einem auf ein Betonierniveau angehobenen Stützkopf der Absenkeinrichtung 20d und in der Ausschalposition AUP mit einem relativ zu dem Betonierniveau abgesenktem Stützkopf der Absenkeinrichtung 20c entsprechend der Einschalposition EIP und der Ausschalposition AUP der mit der jeweiligen Absenkeinreichung 20c, 20d versehenen Stützvorrichtung 14, 14' gezeigt. Die Absenkeinrichtung 20c und die weitere Absenkeinrichtung 20d weisen jeweils eine Stützbasis 18 auf, die in Y-Richtung auf gleicher Höhe angeordnet sind. Dies ist durch Justagebohrungen 35 in jeder der Stützbasen 18 der Absenkeinrichtungen 20c, 20d durch eine horizontale Strichlinie verdeutlicht, die beide Justagebohrungen 35 miteinander verbindet.

In der Stützbasis 18 ist ein Hubkolben 14A geführt, der bei der Absenkeinrichtung 20d derart ausgefahren ist, dass die Absenkeinrichtung 20d und damit die Stützvorrichtung 14' die Einschalposition EIP jeweils erreichen. Eine Hublänge des Hubkolbens 14A entspricht damit einem vertikalen Abstand oder Höhenabstand d zwischen der Ausschalposition AUP und der Einschalposition EIP in Y-Richtung. Die Ausschalposition AUP befindet sich auf Höhe eines oberen Endes der Stützbasis 18, wie dies bei der Absenkeinrichtung 20c gezeigt ist. Die Einschalposition EIP befindet sich auf Höhe eines oberen Endes des Hubkolbens 14A, wie dies bei der Absenkeinrichtung 20d gezeigt ist. Der Höhenabstand zwischen der Einschalposition und der Ausschalposition kann beispielsweise 50 mm betragen. Wenn die Absenkeinrichtung 20d von der Ausschalposition AUP in die Einschalposition EIP versetzt wird, wird nicht nur das obere Ende des Hubkolbens 14A um den Höhenabstand d zwischen der Ausschalposition AUP und der Einschalposition EIP angehoben, sondern auch die auf dem Hubkolben 14A angeordnete Rolle 50d. Durch Versetzen der Rolle 50d von der Ausschalposition AUP in die Einschalposition EIP kann die auf der Rolle 50d verschiebbar aufliegende Deckenschalung 10 auf das Betonierniveau angehoben werden.

In Fig. 8 ist eine der in Fig. 7 gezeigten Absenkeinrichtungen 20d ohne Rolle in einer Querschnittsansicht von vorn mit einem Schieber 12A als Exzenterhebelhaltevorrichtung gezeigt, wobei der Hubkolben 14A in ausgefahrener Einschalposition EIP vorliegt. Die Absenkeinrichtung 20d weist eine mit L bezeichnete Längsachse, den Hubkolben 14A sowie einen Exzenterhebel 16A auf. Der Hubkolben 14A befindet sich wie bei der Absenkeinrichtung 20d in Fig. 7 in der Einschalposition EIP, die zu der Ausschalposition AUP um den Höhenabstand d in Y-Richtung verschoben ist. Die Stützbasis 18 kann in Form eines Gehäuses ausgeführt sein, dass einen Mechanismus einer Arretiervorrichtung, z. B. des Exzenterhebels 16A, schützend umschließt.

Sowohl die Stützbasis 18 als auch der Hubkolben 14A weisen an ihren freien Enden eine Abschlussplatte auf, von der jeweils ein Stützkopf 20A ausgebildet ist. Am hubkolbenseitigen Ende der Stützbasis 18 können zwischen der Stützbasis 18 und dem Stützkopf 20A des Hubkolbens 14A Anschlagnoppen 22 angeordnet sein. Die Anschlagnoppen 22 können dabei auf einer Endplatte 24 der Stützbasis 18 beispielsweise angeschweißt sein. Die Endplatte 24 weist eine der Umfangsform des Querschnittes des Hubkolbens 14A ausgeformte Öffnung (nicht dargestellt) auf, durch die der Hubkolben 14A durchgeschoben ist. Die Querschnittsform des Hubkolbens 14A kann z. B. kreisförmig ausgeführt sein. Es können jedoch auch Ausführungsformen mit einer anderen, insbesondere polygonalen, bevorzugt rechteckigen, Querschnittsform eingesetzt werden. Die Richtung der verschiebbaren Lagerung des Hubkolbens 14A in der Stützbasis 18 ist durch einen Doppelfall 26 symbolisiert eingezeichnet.

Der Hubkolben 14A ist von seiner hier gezeigten herausgeschobenen Arbeitsposition in Form der Einschalposition EIP in die in Fig. 7 mit der Absenkeinrichtung 20c gezeigten Absenkposition in Form der Ausschalposition AUP in einer zur Längsachse L axialen Richtung einschiebbar und mittels der Arretiervorrichtung, z. B. dem Exzenterhebel 16A, in der herausgeschobenen Arbeitsposition arretierbar. Fig. 8 zeigt eine Absenkeinrichtung 20d mit in Arbeitsposition, d. h. aus der Stützbasis 18 maximal ausgerückten Position (=Vorhubposition oder Einschalposition) angeordnetem Hubkolben 14A. Die Absenkeinrichtung 20 befindet sich mit anderen Worten in ihrer Stützfunktionsstellung. Die Teile der Arretiervorrichtung, z. B. der Exzenterhebel 16A, sind entsprechend positioniert. Der in Drehlagern an der Stützbasis 18 drehbar befestigte Exzenterhebel 16A ist über ein Pleuelelement 32 mit dem Hubkolben 14A beweglich verbunden. Dazu weisen der Exzenterhebel 16A und der Hubkolben 14A jeweils eine Bohrung auf, die als weitere Drehlager dienen. Das Pleuelelement 32 weist in dessen Endbereichen jeweils eine bolzenartige Drehachse 34 auf. Die beiden Drehachsen 34 sind jeweils in einem der weiteren Drehlager des Exzenterhebels 16 und des Hubkolbens 14A gelagert.

Der Schwerpunkt des Exzenterhebels 16A befindet sich außerhalb der von einer Stützwelle 30 ausgebildeten Drehachse des Exzenterhebels 16A zwischen dem Hubkolben 14A und der Drehachse des Exzenterhebels 16A.

Eine Nabe 36 der Drehachse der Stützwelle 30 und damit des Exzenterhebels 16A und eine Schraubenmutter 38 zu deren Befestigung sind in Fig. 4 erkennbar. Der Hubkolben 14A, das Pleuelelement 32 und der Exzenterhebel 16A sind ähnlich des Aufbaus eines Hubkolbenmotors angeordnet, wobei das Pleuelelement 32 und der Exzenterhebel 16A einen Kniehebel 40 ausbilden, über den der Hubkolben 14A mit der Stützbasis 18 beweglich verbunden ist. Der Hubkolben 14A und die Stützbasis 18 sind in der dargestellten Arbeitsposition in Form der Einschalposition über den Exzenterhebel 16A gegeneinander abgestützt. In der dargestellten Ausführungsform der Absenkeinrichtung 20 erfolgt dies über die Verbindung mit dem Pleuelelement 32.

Die von dem Schieber 12A ausgebildete Exzenterhebelhaltervorrichtung kann eine Rückstellfeder 44 (integrierte Federrückstellung) aufweisen, wobei der Schieber 12A, z. B. über ein Befestigungsstift 46, mittels der Rückstellfeder 44 an der Stützbasis 18 befestigt ist. Weiter kann an dem Schieber 12A eine Sichtmarkierung zur Unterscheidung der Absenkposition in Form der Ausschalposition AUP von der angehobenen Arbeitsposition in Form der Einschalposition EIP markiert sein. Diese Sichtmarkierung kann z. B. aus einem roten und einem grünen, auf dem freien Ende des langen Schenkels des Schiebers 12A aufgebrachten Sichtfeld bestehen, wobei je nach Stellung des Schiebers 12A nur das rote Sichtfeld oder das rote und das grüne Sichtfeld außerhalb des Gehäuses zu liegen kommen.

Die unter Bezug auf die dargestellte Ausführungsform beschriebenen Merkmale der Erfindung, wie z. B. im fixierten Zustand des Fixierelementes die Verbindung des einen Endes des Drehverminderungselementes mit einem der Seitenwand zugewandten Endabschnitt des Auflageelementes des Auslegers, können auch bei anderen Ausführungsformen der Erfindung vorhanden sein, wie z. B. im fixierten Zustand des Fixierelementes die Verbindung des einen Endes des weiteren Drehverminderungselementes mit einem von der Seitenwand abgewandten Endabschnitt des Auflageelementes des Auslegers, außer wenn es anders angegeben ist oder sich aus technischen Gründen von selbst verbietet.

## Patentansprüche

1. Anordnung aus einer Seitenwand (2a), insbesondere Betonseitenwand, einem Lastelement (10) und einer Stützvorrichtung (14,14', 14", 15, 15', 15", 15‴) für den Baubereich mit einem Fixierelement (14a, 15"a), das an der Seitenwand (2a) anliegt und an einem Fixierpunkt (FP), insbesondere Ankerpunkt, der Seitenwand (2a) fixiert ist, mit einem Ausleger (14b1, 14b2, 14c; 15"b1, 15"b2, 15"c, 15"d, 15"e), der mit dem Fixierelement (14a, 15"a) verbunden ist und im fixierten Zustand des Fixierelementes (14a, 15"a) von der Seitenwand (2a) derart abragt, dass das Lastelement (10) auf einem Auflagepunkt (AP) eines Auflageelementes (14b1, 14b2; 15"b1, 15"b2) des Auslegers (14b1, 14b2, 14c; 15"b1, 15'b2, 15"c-15"e) aufliegt, wobei das Lastelement (10) in eine Verschieberichtung (VR) im Wesentlichen horizontal und im Wesentlichen parallel zur Seitenwand (2a) gegenüber dem Ausleger (14b1, 14b2, 14c; 15"b1, 15'b2, 15"c-15"e) verschiebbar ist, und der bei Auflage des Lastelementes (10) auf dem Auflageelement (14b1, 14b2; 15"b1, 15"b2) des Auslegers (14b1, 14b2, 14c; 15"b1, 15'b2, 15"c-15"e) so mit dem Lastelement (10) gekoppelt ist, dass auf den Ausleger (14b1, 14b2, 14c; 15"b1, 15'b2, 15"c-15"e) aufgrund einer Verschiebung des Lastelementes (10) eine Verschiebekraftkomponente in die Verschieberichtung (VR) wirkt, die zu einem Drehmoment auf den Ausleger (14b1, 14b2, 14c; 15"b1, 15'b2, 15"c-15"e) mit einem Hebelarm (HA) führt, der von dem Fixierpunkt (FP) bis zu dem Auflagepunkt (AP) reicht, und mit zumindest einem Drehverminderungselement (16, 16ʺʺ, 17, 17ʺʺ), das mit einem Ende mit dem Ausleger (14b1, 14b2, 14c; 15"b1, 15'b2, 15"c-15"e) verbunden ist und ausgebildet ist, bei einer Verschiebung des auf dem Ausleger (14b1, 14b2, 14c; 15"b1, 15'b2, 15"c-15"e) aufliegenden Lastelementes (10) mit einem anderen Ende an der Seitenwand (2a) anzuliegen, um dem Drehmoment auf den Ausleger (14b1, 14b2, 14c; 15"b1, 15'b2, 15"c-15"e) entgegenzuwirken, wobei das andere Ende des Drehverminderungselementes (16, 16ʺʺ) / weiteren Drehverminderungselementes (17, 17ʺʺ) in einer zu der Verschieberichtung (VR) senkrechten Ebene relativ zu einer der Seitenwand (2a) zugewandten Seite des Fixierelementes (14a, 15"a) in Richtung der Seitenwand (2a) um eine Ausbuchtung (16b3) hervorsteht derart, dass im fixierten Zustand des Fixierelementes (14a, 15"a) die Ausbuchtung (16b3) an die Seitenwand (2a) gedrückt ist und die Stützvorrichtung (14-14", 15-15‴) zur Erhöhung der Steifigkeit der Stützvorrichtung (14-14", 15-15‴) verspannt ist.

2. Anordnung nach Anspruch 1, wobei das Drehverminderungselement (16, 16"", 17, 17ʺʺ) eine Länge (16L) von dem einen Ende zu dem anderen Ende aufweist, die ausreicht, eine Drehung des Auslegers (14b1, 14b2, 14c; 15"b1, 15'b2, 15"c-15"e) aufgrund des Drehmomentes auf den Ausleger (14b1, 14b2, 14c; 15"b1, 15'b2, 15"c-15"e) derart zu vermindern, dass ein Wegklappen oder Wegschwenken des Auslegers (14b1, 14b2, 14c; 15"b1, 15'b2, 15"c-15"e) um den Fixierpunkt (FP) ausgeschlossen ist.

3. Anordnung nach Anspruch 2, wobei das Drehverminderungselement (16, 16ʺʺ, 17, 17ʺʺ) eine Länge (16L) von dem einen Ende zu dem anderen Ende aufweist, die ausreicht, eine Drehung des Auslegers (14b1, 14b2, 14c; 15"b1, 15'b2, 15"c-15"e) aufgrund des Drehmomentes auf den Ausleger (14b1, 14b2, 14c; 15"b1, 15'b2, 15"c-15"e) derart zu vermindern, dass ein Wegklappen oder Wegschwenken des Auslegers (14b1, 14b2, 14c; 15"b1, 15'b2, 15"c-15"e) um eine erste Schwenkachse (D1), die senkrecht auf der Seitenwand (2a) steht und den Fixierpunkt (FP) umfasst, und / oder um eine zweite Schwenkachse (D2), die in einer Ebene der Seitenwand (2a) liegt und den Fixierpunkt (FP) umfasst, ausgeschlossen ist.

4. Anordnung nach einem der vorhergehenden Ansprüche, wobei das Drehverminderungselement (16, 16"", 17, 17"") als Stützflügel mit langgestreckter Form als Vollkörper oder Hohlkörper, insbesondere mit einem Rohrprofil, ausgebildet ist.

5. Anordnung nach einem der vorhergehenden Ansprüche, wobei im fixierten Zustand des Fixierelementes (14a, 15"a) das Drehverminderungselement (16, 16ʺʺ) sich im Wesentlichen in Verschieberichtung (VR) von dem Ausleger (14b1, 14b2, 14c; 15"b1, 15'b2, 15"c-15"e) weg erstreckt und / oder ein weiteres Drehverminderungselement (17, 17ʺʺ) sich in im Wesentlichen zu der Verschieberichtung (VR) entgegengesetzter Richtung von dem Ausleger (14b1, 14b2, 14c; 15"b1, 15'b2, 15"c-15"e) weg erstreckt.

6. Anordnung nach einem der vorhergehenden Ansprüche, wobei im fixierten Zustand des Fixierelementes (14a, 15"a) das eine Ende des Drehverminderungselementes (16, 16ʺʺ) / weiteren Drehverminderungselementes (17, 17ʺʺ) mit einem der Seitenwand (2a) zugewandten Endabschnitt des Auslegers (14b1, 14b2, 14c; 15"b1, 15'b2, 15"c-15"e), insbesondere des Auflageelementes (14b1, 14b2; 15"b1, 15"b2) des Auslegers (14b1, 14b2, 14c; 15"b1, 15'b2, 15"c-15"e), verbunden ist.

7. Anordnung nach einem der vorhergehenden Ansprüche, wobei im fixierten Zustand des Fixierelementes (14a, 15"a) das Drehverminderungselement (16, 16ʺʺ) / weitere Drehverminderungselement (17, 17ʺʺ) an einer der Seitenwand (2a) zugewandten Seite des Drehverminderungselementes (16, 16ʺʺ) / weiteren Drehverminderungselementes (17, 17ʺʺ) eine Ausnehmung (17e) derart aufweist, dass ein Keil (17f), insbesondere Holzkeil, zwischen dem Drehverminderungselement (16, 16ʺʺ) / weiteren Drehverminderungselement (17, 17ʺʺ) und der Seitenwand (2a) zumindest teilweise von der Ausnehmung (17e) geführt anordenbar ist, dass im fixierten Zustand des Fixierelementes (14a, 15"a) der Keil (17f) an die Seitenwand (2a) gedrückt ist, um die Stützvorrichtung (14-14", 15-15‴) zur Erhöhung der Steifigkeit der Stützvorrichtung (14-14", 15-15‴) zu verspannen.

8. Anordnung nach einem der vorhergehenden Ansprüche, wobei das Auflageelement (14b1, 14b2; 15"b1, 15"b2) des Auslegers (14b1, 14b2, 14c; 15"b1, 15'b2, 15"c-15"e) im fixierten Zustand des Fixierelementes (14a, 15"a) um eine im Wesentlichen horizontale, im Wesentlichen parallel zu der Seitenwand (2a) verlaufende erste Drehachse (14L1) drehbar mit dem Fixierelement (14a, 15"a) verbunden ist.

9. Anordnung nach Anspruch 8, wobei das andere Ende des Drehverminderungselementes (16, 16ʺʺ) / weiteren Drehverminderungselementes (17, 17ʺʺ) durch ein Anlageelement (16b, 16ʺʺb, 17b, 17ʺʺb) mit einer der Seitenwand (2a) zugewandten Anlagefläche im fixierten Zustand des Fixierelementes (14a, 15"a) gebildet ist, wobei die Anlagefläche eine in einer zu der Verschieberichtung (VR) senkrechten Ebene in Richtung der Seitenwand (2a) derart konzentrisch zu der ersten Drehachse (14L1) des Auflageelementes (14b1, 14b2; 15"b1, 15"b2) des Auslegers (14b1, 14b2, 14c; 15"b1, 15'b2, 15"c-15"e) gekrümmt ist, dass bei im Wesentlichen horizontaler Ausrichtung, beispielsweise in einem Winkelbereich von +/- 10° um die Horizontale, des Auflageelementes (14b1, 14b2; 15"b1, 15"b2) des Auslegers (14b1, 14b2, 14c; 15"b1, 15'b2, 15"c-15"e) und unterschiedlichen positiven oder negativen Neigungswinkeln (α) der Seitenwand (2a) zur Vertikalen in einer zu der Verschieberichtung (VR) senkrechten Ebene die Seitenwand (2a) eine Tangente an die der Seitenwand (2a) zugewandte Anlagefläche bildet.

10. Anordnung nach Anspruch 9, wobei die Anlagefläche gezackt ausgebildet ist, insbesondere mit entlang der Verschieberichtung (VR) verlaufenden, in Richtung der Seitenwand (2a) orientierten Zacken (16b2) bei einer Verschiebung des auf dem Ausleger (14b1, 14b2, 14c; 15"b1, 15'b2, 15"c-15"e) aufliegenden Lastelementes (10), wobei die Zacken (16b2) insbesondere ausgebildet sind, bei Anlage an der Seitenwand (2a) wie Spikes wirken.

11. Anordnung nach Anspruch 10, wobei die Ausbuchtung (16b3) durch die Zacken (16b2) gebildet ist.

12. Anordnung nach einem der Ansprüche 9 bis 11, wobei das Anlageelement (16b, 16ʺʺb, 17b, 17ʺʺb) im fixierten Zustand des Fixierelementes (14a, 15"a) in einer zu der Verschieberichtung (VR) senkrechten Ebene horizontal verschiebbar mit dem Ausleger (14b1, 14b2, 14c; 15"b1, 15'b2, 15"c-15"e) verbunden ist.

13. Anordnung nach einem der Ansprüche 8 bis 12, wobei der Ausleger (14b1, 14b2, 14c; 15"b1, 15'b2, 15"c-15"e) neben dem Auflageelement (14b1, 14b2; 15"b1, 15'b2) ein erstes Stützelement (14c, 15"c) umfasst, wobei das Auflageelement (14b1, 14b2; 15"b1, 15'b2) einenends um die erste Drehachse (14L1) drehbar mit dem Fixierelement (14a, 15"a) und anderenends im fixierten Zustand des Fixierelementes (14a, 15"a) um eine im Wesentlichen horizontale, im Wesentlichen parallel zu der Seitenwand (2a) verlaufende zweite Drehachse (14L2) drehbar mit dem ersten Stützelement (14c, 15"c) verbunden ist, dessen der Seitenwand (2a) zugewandtes Ende im fixierten Zustand des Fixierelementes (14a, 15"a) um eine im Wesentlichen horizontale, im Wesentlichen parallel zu der Seitenwand (2a) verlaufende dritte Drehachse (14L3) drehbar mit dem Fixierelement (14a, 15"a) verbunden ist.

14. Anordnung nach Anspruch 13, wobei das Auflageelement (15"b1, 15"b2) anderenends im fixierten Zustand des Fixierelementes (15"a) um die im Wesentlichen horizontale, im Wesentlichen parallel zu der Seitenwand (2a) verlaufende zweite Drehachse (14L2) drehbar mit einem zweiten Stützelement (15"d) verbunden ist, dessen dem Auflageelement (15"b1, 15"b2) abgewandtes Ende über eine im Wesentlichen horizontale, im Wesentlichen parallel zu der Seitenwand (2a) verlaufende weitere Drehachse mit dem ersten Stützelement (15"c) verbunden ist, wobei insbesondere ein drittes Stützelement (15"e) einenends mit dem von dem Auflageelement (15"b1, 15"b2) abgewandten Ende des zweiten Stützelementes (15"d) und anderenends mit der ersten Drehachse (14L1) verbunden ist, wobei die Seitenwand (2a) insbesondere einen negativen Neigungswinkel (α) zur Vertikalen aufweist.

15. Anordnung nach Anspruch 13, bei dem das Stützelement (14c, 15"c) als Teleskop, insbesondere in Form einer Spindel oder einer Hubvorrichtung, derart ausgebildet ist, dass bei unterschiedlichen positiven oder negativen Neigungswinkeln (α) der Seitenwand (2a) eine im Wesentlichen horizontale Ausrichtung, beispielsweise in einem Winkelbereich von +/- 10° um die Horizontale, des Auflageelementes (14b1, 14b2; 15"b1, 15"b2) des Auslegers (14b1, 14b2, 14c; 15"b1, 15'b2, 15"c-15"e) gewährleistet ist.

16. Anordnung nach einem der Ansprüche 1 bis 15 mit zumindest zwei in der Verschieberichtung nebeneinander angeordneten Stützvorrichtungen (15, 15'; 15", 15‴), insbesondere Anordnung nach Anspruch 15 mit zumindest zwei in der Verschieberichtung nebeneinander angeordneten Stützvorrichtungen (15", 15‴) bei Fixierung des Fixierelementes (15"a) an dem Fixierpunkt der einen negativen Neigungswinkel (α) zur Vertikalen aufweisenden Seitenwand (2a), wobei die Stützvorrichtungen (15, 15'; 15", 15‴) jeweils als Fahrbahnplattenkonsolen ausgeführt sind, die eine Stützvorrichtung (15, 15") im fixierten Zustand des Fixierelementes (14a, 15"a) ein / das sich im Wesentlichen in Verschieberichtung (VR) von dem Ausleger weg erstreckende Drehverminderungselement (16‴, 16ʺʺ) aufweist, die andere Stützvorrichtung (15', 15‴) im fixierten Zustand des Fixierelementes (14a, 15"a) ein weiteres / das weitere sich in im Wesentlichen zu der Verschieberichtung (VR) entgegengesetzter Richtung von dem Ausleger weg erstreckende Drehverminderungselement (17‴, 17ʺʺ) aufweist, und die Stützvorrichtungen (15, 15'; 15", 15‴) durch zumindest eine Längsstrebe (S2) miteinander verbunden sind.

17. Taktschiebevorrichtung mit zumindest einer Anordnung nach einem der Ansprüche 1 bis 15 oder zumindest einer Anordnung nach Anspruch 16 mit zwei Stützvorrichtungen (15, 15'; 15ʺʺ, 15‴) und einer Deckenschalung (10) mit einem Schalhautträgerelement (6a, 6b), das zur Ausformung einer Unterseite (3U) einer Fahrbahnplatte (3) ausgebildet ist, wobei die Stützvorrichtung (14-14", 15-15‴) als Fahrbahnplattenkonsole ausgeführt ist und an einem der Deckenschalung (10) zugewandten Ende einen Stützkopf (20A) umfasst, wobei der Stützkopf (20A) mit dem Auflageelement (14b1, 14b2; 15"b1, 15"b2) des Auslegers (14b1, 14b2, 14c; 15"b1, 15'b2, 15"c-15"e) verbunden ist und eine Rolle (50c, 50d, 50e) zur Anlage an einem Längsträger (4) der Deckenschalung (10) aufweist.

18. Taktschiebevorrichtung nach Anspruch 17, bei der der Ausleger (14b1, 14b2, 14c; 15"b1, 15'b2, 15"c-15"e) mit einer Absenkeinrichtung (20c - 20e) mit einem Hubkolben (14A), einer Stützbasis (18) und mit einer Arretiervorrichtung versehen ist, wobei der Hubkolben (14A) in der Stützbasis (18) verschiebbar gelagert ist und von einer Einschalposition (EIP) in eine Ausschalposition (AUP) einschiebbar ist und mittels der Arretiervorrichtung in der herausgeschobenen Arbeitsposition arretierbar ist, wobei die Arretiervorrichtung mit einem Drehlager (28) und einem Exzenterhebel (16A) versehen ist, wobei der Exzenterhebel (16A) in dem Drehlager (28) drehbar befestigt ist und der Hubkolben (14A) und die Stützbasis (18) in der Arbeitsposition (s.o.) über den Exzenterhebel (16A) gegeneinander abgestützt sind, und die Stützbasis (18) und/oder der Hubkolben (14A) einenends den Stützkopf (20A) bilden.

19. Verfahren zum Stützen eines Lastelementes (10), insbesondere einer Deckenschalung beim Taktschiebeverfahren, im Baubereich durch eine Stützvorrichtung (14-14", 15-15‴) mit einem Fixierelement (14a, 15"a), einem Ausleger (14b1, 14b2, 14c; 15"b1, 15'b2, 15"c-15"e) und zumindest einem Drehverminderungselement (16, 16ʺʺ, 17, 17ʺʺ) mit den Schritten:
- Anlegen des Fixierelementes (14a 15"a) an eine Seitenwand (2a), insbesondere Betonseitenwand, und Fixieren des Fixierelementes (14a, 15"a) an einem Fixierpunkt (FP), insbesondere Ankerpunkt, der Seitenwand (2a),
- Verbinden des Auslegers (14b1, 14b2, 14c; 15"b1, 15'b2, 15"c-15"e) mit dem Fixierelement (14a, 15"a),
- Abragen des Auslegers (14b1, 14b2, 14c; 15"b1, 15'b2, 15"c-15"e) von der Seitenwand (2a),
- Auflegen des Lastelementes (10) auf einen Auflagepunkt (AP) eines Auflageelementes (14b1, 14b2; 15"b1, 15"b2) des Auslegers (14b1, 14b2, 14c; 15"b1, 15'b2, 15"c-15"e),
- Verschieben des Lastelementes (10) in eine Verschieberichtung (VR) im Wesentlichen parallel zur Seitenwand (2a) gegenüber dem Ausleger (14b1, 14b2, 14c; 15"b1, 15'b2, 15"c-15"e),
- Koppeln des Auslegers (14b1, 14b2, 14c; 15"b1, 15'b2, 15"c-15"e) so mit dem Lastelement (10), dass auf den Ausleger (14b1, 14b2, 14c; 15"b1, 15'b2, 15"c-15"e) aufgrund einer Verschiebung des Lastelementes (10) eine Verschiebekraftkomponente in die Verschieberichtung (VR) wirkt, die zu einem Drehmoment auf den Ausleger (14b1, 14b2, 14c; 15"b1, 15'b2, 15"c-15"e) mit einem Hebelarm (HA) führt, der von dem Fixierpunkt (FP) bis zu dem Auflagepunkt (AP) reicht,
- Verbinden eines Endes des Drehverminderungselementes (16, 16"", 17, 17ʺʺ) mit dem Ausleger (14b1, 14b2, 14c; 15"b1, 15'b2, 15"c-15"e), und
- Anlegen eines anderen Endes des Drehverminderungselementes (16, 16"", 17, 17ʺʺ) an die Seitenwand (2a), um dem Drehmoment auf den Ausleger (14b1, 14b2, 14c; 15"b1, 15'b2, 15"c-15"e) entgegenzuwirken,
- Verbinden des Drehverminderungselementes (16, 16ʺʺ) sich im Wesentlichen in der Verschieberichtung (VR) von dem Ausleger (14b1, 14b2, 14c; 15"b1, 15'b2, 15"c-15"e) weg erstreckend und / oder eines weiteren Drehverminderungselementes (17, 17ʺʺ) sich in im Wesentlichen zu der Verschieberichtung (VR) entgegengesetzter Richtung von dem Ausleger weg erstreckend mit dem Ausleger (14b1, 14b2, 14c; 15"b1, 15'b2, 15"c-15"e),
- Ausbilden des anderen Endes jeweils des Drehverminderungselementes (16, 16ʺʺ) und / oder des weiteren Drehverminderungselementes (17, 17ʺʺ) in einer zu der Verschieberichtung (VR) senkrechten Ebene relativ zu einer der Seitenwand (2a) zugewandten Seite des Fixierelementes (14a, 15"a) in Richtung der Seitenwand (2a) um eine Ausbuchtung (16b3) hervorstehend,
- Fixieren des Fixierelementes (14a, 15"a),
- Drücken der Ausbuchtung / Ausbuchtungen (16b3) an die Seitenwand (2a), und
- Verspannen der Stützvorrichtung (14-14", 15-15‴) zur Erhöhung der Steifigkeit der Stützvorrichtung (14-14", 15-15‴).

20. Verfahren zum Stützen eines Lastelementes nach Anspruch 19, bei dem
- das Drehverminderungselement (16, 16ʺʺ) / weitere Drehverminderungselement (17, 17ʺʺ) an einer der Seitenwand (2a) zugewandten Seite des Drehverminderungselementes (16, 16ʺʺ) / weiteren Drehverminderungselementes (17, 17ʺʺ) mit einer Ausnehmung (17e) versehen wird,
- ein Keil (17f), insbesondere Holzkeil, zwischen dem Drehverminderungselement (16, 16ʺʺ) / weiteren Drehverminderungselement (17, 17ʺʺ) und der Seitenwand (2a) zumindest teilweise von der Ausnehmung geführt angeordnet wird, und
- der Keil (17f) an die Seitenwand (2a) gedrückt wird, um die Stützvorrichtung (14-14", 15-15‴) zur Erhöhung der Steifigkeit der Stützvorrichtung (14-14", 15- 15‴) zu verspannen.

## Claims

1. Arrangement consisting of side wall (2a), in particular a concrete side wall, a load element (10) and a supporting device (14, 14', 14", 15, 15', 15", 15"') for the construction industry, comprising a fixing element (14a, 15"a), which rests against the side wall (2a) and is fixed to a fixing point (FP), in particular an anchoring point, of the side wall (2a), comprising a cantilever (14b1, 14b2, 14c; 15"b1, 15"b2, 15"c, 15"d, 15"e), which is connected to the fixing element (14a, 15"a) and protrudes from the side wall (2a) when the fixing element (14a, 15"a) is in the fixed state such that the load element (10) bears against a bearing point (AP) of a bearing element (14b1, 14b2; 15"b1, 15"b2) of the cantilever (14b1, 14b2, 14c; 15"b1, 15'b2, 15"c-15"e), wherein the load element (10) can be moved with respect to the cantilever (14b1, 14b2, 14c; 15"b1, 15'b2, 15"c-15"e) in a movement direction (VR) that is substantially horizontal and substantially parallel to the side wall (2a), and which cantilever is coupled to the load element (10) when the load element (10) bears against the bearing element (14b1, 14b2; 15"b1, 15"b2) of the cantilever (14b1, 14b2, 14c; 15"b1, 15'b2, 15"c-15"e) such that a movement force component acts on the cantilever (14b1, 14b2, 14c; 15"b1, 15'b2, 15"c-15"e) in the movement direction (VR) due to a movement of the load element (10), which leads to a torque on the cantilever (14b1, 14b2, 14c; 15"b1, 15'b2, 15"c-15"e) by means of a lever arm (HA) that reaches from the fixing point (FP) to the bearing point (AP), and comprising at least one rotation-reducing element (16, 16"", 17, 17""), which is connected at one end to the cantilever (14b1, 14b2, 14c; 15"b1, 15'b2, 15"c-15"e) and is designed to rest against the side wall (2a) by means of a different end when the load element (10) bearing against the cantilever (14b1, 14b2, 14c; 15"b1, 15'b2, 15"c-15"e) moves in order to counteract the torque on the cantilever (14b1, 14b2, 14c; 15"b1, 15'b2, 15"c-15"e), wherein the other end of the rotation-reducing element (16, 16"")/additional rotation-reducing element (17, 17"") protrudes relative to a side of the fixing element (14a, 15"a), which faces the side wall (2a), by a protrusion (16b3) in the direction of the side wall (2a) in a plane that is perpendicular to the movement direction (VR) such that, when the fixing element (14a, 15"a) is in the fixed state, the protrusion (16b3) is pressed against the side wall (2a) and the supporting device (14-14", 15-15'") is braced in order to increase the rigidity of the supporting device (14-14", 15-15'").

2. Arrangement as per claim 1, wherein the rotation-reducing element (16, 16"", 17, 17"") has a length (16L) from one end to the other end that is sufficient for minimizing a rotational movement of the cantilever (14b1, 14b2, 14c; 15"b1, 15'b2, 15"c-15"e) due to the torque on the cantilever (14b1, 14b2, 14c; 15"b1, 15'b2, 15"c-15"e) such that the cantilever (14b1, 14b2, 14c; 15"b1, 15'b2, 15"c-15"e) is prevented from folding or pivoting away around the fixing point (FP).

3. Arrangement as per claim 2, wherein the rotation-reducing element (16, 16"", 17, 17"") has a length (16L) from one end to the other end that is sufficient for minimizing a rotational movement of the cantilever (14b1, 14b2, 14c; 15"b1, 15'b2, 15"c-15"e) due to the torque on the cantilever (14b1, 14b2, 14c; 15"b1, 15'b2, 15"c-15"e) such that the cantilever (14b1, 14b2, 14c; 15"b1, 15'b2, 15"c-15"e) is prevented from folding or pivoting away about a first pivot axis (D1), which is perpendicular on the side wall (2a) and comprises the fixing point (FP), and/or about a second pivot axis (D2), which lies in a plane of the side wall (2a) and comprises the fixing point (FP).

4. Arrangement as per any one of the preceding claims, wherein the rotation-reducing element (16, 16"", 17, 17"") is designed as a support wing having an elongate shape in the form of a solid body or hollow body, in particular having a tubular profile.

5. Arrangement as per any one of the preceding claims, wherein, when the fixing element (14a, 15"a) is in the fixed state, the rotation-reducing element (16, 16"") extends away from the cantilever (14b1, 14b2, 14c; 15"b1, 15'b2, 15"c-15"e) substantially in the movement direction (VR) and/or another rotation-reducing element (17, 17"") extends away from the cantilever (14b1, 14b2, 14c; 15"b1, 15'b2, 15"c-15"e) in a direction that is substantially opposite the movement direction (VR).

6. Arrangement as per any one of the preceding claims, wherein, when the fixing element (14a, 15"a) is in the fixed state, one end of the rotation-reducing element (16, 16"")/the additional rotation-reducing element (17, 17"") is connected to an end portion of the cantilever (14b1, 14b2, 14c; 15"b1, 15'b2, 15"c-15"e), in particular of the bearing element (14b1, 14b2; 15"b1, 15"b2) of the cantilever (14b1, 14b2, 14c; 15"b1, 15'b2, 15"c-15"e), which end portion faces the side wall (2a).

7. Arrangement as per any one of the preceding claims, wherein, when the fixing element (14a, 15"a) is in the fixed state, the rotation-reducing element (16, 16"")/additional rotation-reducing element (17, 17"") comprises a recess (17e) on a side of the rotation-reducing element (16, 16"")/additional rotation-reducing element (17, 17"") that faces the side wall (2a) such that a wedge (17f), in particular a wooden wedge, can be arranged between the rotation-reducing element (16, 16"")/additional rotation-reducing element (17, 17"") and the side wall (2a) so as to be guided by the recess (17e), at least in part, such that, when the fixing element (14a, 15"a) is in the fixed state, the wedge (17f) is pressed against the side wall (2a) in order to brace the supporting device (14-14", 15-15'") so as to increase the rigidity of the supporting device (14-14", 15-15'").

8. Arrangement as per any one of the preceding claims, wherein the bearing element (14b1, 14b2; 15"b1, 15"b2) of the cantilever (14b1, 14b2, 14c; 15"b1, 15'b2, 15"c-15"e) is connected to the fixing element (14a, 15"a) when the fixing element (14a, 15"a) is in the fixed state so as to be rotatable around a substantially horizontal first rotary shaft (14L1) that extends substantially in parallel with the side wall (2a).

9. Arrangement as per claim 8, wherein the other end of the rotation-reducing element (16, 16"")/additional rotation-reducing element (17, 17"") is formed by a bearing element (16b, 16""b, 17b, 17""b) having a bearing surface that faces the side wall (2a) when the fixing element (14a, 15"a) is in the fixed state, wherein the bearing surface is curved concentrically to the first rotary shaft (14L1) of the bearing element (14b1, 14b2; 15"b1, 15"b2) of the cantilever (14b1, 14b2, 14c; 15"b1, 15'b2, 15"c-15"e) in a plane that is perpendicular to the movement direction (VR) in the direction of the side wall (2a) such that, when the bearing element (14b1, 14b2; 15"b1, 15"b2) of the cantilever (14b1, 14b2, 14c; 15"b1, 15'b2, 15"c-15"e) is oriented substantially horizontally, for example in an angular range of +/- 10° around the horizontal, and at different positive or negative inclination angles (α) of the side wall (2a) with respect to the vertical in a plane that is perpendicular to the movement direction (VR), the side wall (2a) forms a tangent on the bearing surface that faces the side wall (2a).

10. Arrangement as per claim 9, wherein the bearing surface is serrated, in particular having teeth (16b2) that run in the movement direction (VR) and are oriented in the direction of the side wall (2a) when the load element (10) bearing against the cantilever (14b1, 14b2, 14c; 15"b1, 15'b2, 15"c-15"e) moves, wherein the teeth (16b2) are in particular designed to act as spikes when they rest against the side wall (2a).

11. Arrangement as per claim 10, wherein the protrusion (16b3) is formed by the teeth (16b2).

12. Arrangement as per any one of claims 9 to 11, wherein the bearing element (16b, 16""b, 17b, 17""b) is connected to the cantilever (14b1, 14b2, 14c; 15"b1, 15'b2, 15"c-15"e) so as to be horizontally moveable in a plane that is perpendicular to the movement direction (VR) when the fixing element (14a, 15"a) is in the fixed state.

13. Arrangement as per any one of claims 8 to 12, wherein the cantilever (14b1, 14b2, 14c; 15"b1, 15'b2, 15"c-15"e) comprises a first support element (14c, 15"c) in addition to the bearing element (14b1, 14b2; 15"b1, 15'b2), wherein the bearing element (14b1, 14b2; 15"b1, 15'b2) is connected to the fixing element (14a, 15"a) at one end so as to be rotatable about the first rotary shaft (14L1) and at the other end to the first support element (14c, 15"c) so as to be rotatable around a substantially horizontal second rotary shaft (14L2) that extends substantially in parallel with the side wall (2a) when the fixing element (14a, 15"a) is in the fixed state, the end of which first support element that faces the side wall (2a) being connected to the fixing element (14a, 15"a) so as to be rotatable around a substantially horizontal third rotary shaft (14L3) that extends substantially in parallel with the side wall (2a) when the fixing element (14a, 15"a) is in the fixed state.

14. Arrangement as per claim 13, wherein the bearing element (15"b1, 15"b2) is connected at the other end to a second support element (15"d) so as to be rotatable about the substantially horizontal second rotary shaft (14L2) that extends substantially in parallel with the side wall (2a) when the fixing element (15"a) is in the fixed state, the end of which second support element that faces away from the bearing element (15"b1, 15"b2) is connected to the first support element (15"c) by means of a substantially horizontal additional rotary shaft that extends substantially in parallel with the side wall (2a), wherein in particular a third support element (15"e) is connected at one end to the end of the second support element (15"d) that faces away from the bearing element (15"b1, 15"b2) and at the other end to the first rotary shaft (14L1), wherein the side wall (2a) in particular comprises a negative inclination angle (α) with respect to the vertical.

15. Arrangement as per claim 13, in which the support element (14c, 15"c) is formed as a telescope, in particular in the form of a spindle or a lifting apparatus, such that, at different positive or negative inclination angles (α) of the side wall (2a), a substantially horizontal orientation, for example in an angular range of +/- 10° around the horizontal, of the bearing element (14b1, 14b2; 15"b1, 15"b2) of the cantilever (14b1, 14b2, 14c; 15"b1, 15'b2, 15"c-15"e) is ensured.

16. Arrangement as per any one of claims 1 to 15 comprising of at least two supporting devices (15, 15'; 15", 15'") arranged next to one another in the movement direction, in particular arrangement as per claim 15 comprising at least two supporting devices (15", 15'") arranged next to one another in the movement direction when the fixing element (15"a) is fixed to the fixing point of the side wall (2a) that has a negative inclination angle (α) with respect to the vertical, wherein the supporting devices (15, 15'; 15", 15'") are each designed as deck slab brackets, one supporting device (15, 15") comprising a/the rotation-reducing element (16'", 16"") that extends away from the cantilever substantially in the movement direction (VR) when the fixing element (14a, 15"a) is in the fixed state, the other supporting device (15', 15'") comprising another/the additional rotation-reducing element (17'", 17"") that extends away from the cantilever in the direction that is substantially opposite to the movement direction (VR) when the fixing element (14a, 15"a) is in the fixed state, and the supporting devices (15, 15'; 15", 15'") are interconnected by at least one longitudinal strut (S2).

17. Incremental launching device comprising at least an arrangement according to any one of claims 1 to 15 or at least one arrangement according to claim 16 comprising of two supporting devices (15, 15'; 15"", 15'") and slab formwork (10) comprising a formwork shell carrier element (6a, 6b) that is formed to shape an underside (3U) of a deck slab (3), wherein the supporting device (14-14", 15-15'") is formed as a deck slab bracket and comprises a support head (20A) at an end that faces the slab formwork (10), wherein the support head (20A) is connected to the bearing element (14b1, 14b2; 15"b1, 15"b2) of the cantilever (14b1, 14b2, 14c; 15"b1, 15'b2, 15"c-15"e) and comprises a roller (50c, 50d, 50e) for bearing against a longitudinal carrier (4) of the slab formwork (10).

18. Incremental launching device as per claim 17, wherein the cantilever (14b1, 14b2, 14c; 15"b1, 15'b2, 15"c-15"e) is provided with a lowering apparatus (20c-20e) comprising a reciprocating piston (14A), a support base (18) and comprising a locking device, wherein the reciprocating piston (14A) is movably mounted in the support base (18) and can be moved into a formwork-removal position (AUP) from a formwork-erection position (EIP) and can be locked in the pushed-out operating position by means of the locking device, wherein the locking device is provided with a rotary bearing (28) and a cam lever (16A), wherein the cam lever (16A) is rotatably fastened in the rotary bearing (28) and the reciprocating piston (14A) and the support base (18) are supported against one another in the working position (see above) by means of the cam lever (16A), and the support base (18) and/or the reciprocating piston (14A) form the support head (20A) at one end.

19. Method for supporting a load element (10), in particular slab formwork during the incremental launching method, in the construction industry by means of a supporting device (14-14", 15-15"'), comprising a fixing element (14a, 15"a), a cantilever (14b1, 14b2, 14c; 15"b1, 15'b2, 15"c-15"e) and at least one rotation-reducing element (16, 16"", 17, 17""), comprising the steps of:
- positioning the fixing element (14a, 15"a) against a side wall (2a), in particular a concrete side wall, and fixing the fixing element (14a, 15"a) to a fixing point (FP), in particular an anchoring point, of the side wall (2a),
- connecting the cantilever (14b1, 14b2, 14c; 15"b1, 15'b2, 15"c-15"e) to the fixing element (14a, 15"a),
- protruding the cantilever (14b1, 14b2, 14c; 15"b1, 15'b2, 15"c-15"e) from the side wall (2a),
- bearing the load element (10) against a bearing point (AP) of a bearing element (14b1, 14b2; 15"b1, 15"b2) of the cantilever (14b1, 14b2, 14c; 15"b1, 15'b2, 15"c-15"e),
- moving the load element (10) with respect to the cantilever (14b1, 14b2, 14c; 15"b1, 15'b2, 15"c-15"e) in a movement direction (VR) substantially in parallel with the side wall (2a),
- coupling the cantilever (14b1, 14b2, 14c; 15"b1, 15'b2, 15"c-15"e) to the load element (10) such that a movement force component acts on the cantilever (14b1, 14b2, 14c; 15"b1, 15'b2, 15"c-15"e) in the movement direction (VR) due to a movement of the load element (10), which component leads to a torque on the cantilever (14b1, 14b2, 14c; 15"b1, 15'b2, 15"c-15"e) by means of a lever arm (HA) that reaches from the fixing point (FP) to the bearing point (AP),
- connecting one end of the rotation-reducing element (16, 16"", 17, 17"") to the cantilever (14b1, 14b2, 14c; 15"b1, 15'b2, 15"c-15"e), and
- bearing another end of the rotation-reducing element (16, 16"", 17, 17"") against the side wall (2a) in order to counteract the torque on the cantilever (14b1, 14b2, 14c; 15"b1, 15'b2, 15"c-15"e),
- connecting the rotation-reducing element (16, 16"") extending substantially in the movement direction (VR) away from the cantilever (14b1, 14b2, 14c; 15"b1, 15'b2, 15"c-15"e) and/or an additional rotation-reducing element (17, 17"") extending in a direction that is substantially opposite the movement direction (VR) away from the cantilever to the cantilever (14b1, 14b2, 14c; 15"b1, 15'b2, 15"c-15"e),
- forming the other end of the rotation-reducing element (16, 16"") and/or of the additional rotation-reducing element (17, 17"") in each case so as to protrude relative to a side of the fixing element (14a, 15"a) that faces the side wall (2a) in the direction of the side wall (2a) by means of a protrusion (16b3) in a plane that is perpendicular to the movement direction (VR),
- fixing the fixing element (14a, 15"a),
- pressing the protrusion/protrusions (16b3) against the side wall (2a), and
- bracing the supporting device (14-14", 15-15'") in order to increase the rigidity of the supporting device (14-14", 15-15'").

20. The method for supporting a load element as per either claim 19, in which
- the rotation-reducing element (16, 16"")/additional rotation-reducing element (17, 17"") is provided with a recess (17e) on a side of the rotation-reducing element (16, 16"")/additional rotation-reducing element (17, 17"") that faces the side wall (2a),
- a wedge (17f), in particular a wooden wedge, is arranged between the rotation-reducing element (16, 16"")/additional rotation-reducing element (17, 17"") and the side wall (2a) so as to be guided by the recess, at least in part, and
- the wedge (17f) is pressed against the side wall (2a) in order to brace the supporting device (14-14", 15-15"') so as to increase the rigidity of the supporting device (14-14", 15-15").

## Revendications

1. Ensemble composé d'une paroi latérale (2a), en particulier d'une paroi latérale en béton, d'un élément de charge (10) et d'un dispositif de soutien (14, 14', 14", 15, 15', 15", 15"') destiné au secteur du bâtiment avec un élément de fixation (14a, 15"a) qui s'appuie contre la paroi latérale (2a) et est fixé à un point de fixation (FP), notamment un point d'ancrage, de la paroi latérale (2a), ainsi qu'un bras (14b1, 14b2, 14c; 15"b1, 15"b2, 15"c, 15"d, 15"e) relié à l'élément de fixation (14a, 15"a) et qui, lorsque l'élément de fixation est fixé, (14a, 15"a) fait saillie de la paroi latérale (2a) de telle sorte que l'élément de charge (10) repose sur un point d'appui (AP) d'un élément d'appui (14b1, 14b2; 15"b1, 15"b2) du bras (14b1, 14b2, 14c; 15"b1, 15'b2, 15"c-15"e), l'élément de charge (10) pouvant coulisser dans une direction de déplacement (VR) sensiblement horizontale et sensiblement parallèle à la paroi latérale (2a) par rapport au bras (14b1, 14b2, 14c; 15"b1, 15'b2, 15"c-15"e), et qui, lorsque l'élément de charge (10) repose sur l'élément d'appui (14b1, 14b2; 15"b1, 15"b2) du bras (14b1, 14b2, 14c ; 15"b1, 15'b2, 15"c-15"e) est couplé à l'élément de charge (10) de telle sorte que, lors d'un déplacement de l'élément de charge (10), une composante de force de déplacement s'exerce dans la direction de déplacement (VR) sur le bras (14b1, 14b2, 14c; 15"b1, 15'b2, 15"c-15"e) qui entraîne un couple sur le bras (14b1, 14b2, 14c; 15"b1, 15'b2, 15"c-15"e) avec un bras de levier (HA) s'étendant du point de fixation (FP) jusqu'au point d'appui (AP), et comportant au moins un élément de réduction de couple (16, 16"", 17, 17""), qui est relié par une extrémité au bras (14b1, 14b2, 14c; 15"b1, 15'b2, 15"c-15"e), et qui est conçu pour venir s'appuyer, lors d'un déplacement de l'élément de charge (10) reposant sur le bras (14b1, 14b2, 14c; 15"b1, 15'b2, 15"c-15"e) contre la paroi latérale (2a) afin de contrecarrer le couple exercé sur le bras (14b1, 14b2, 14c; 15"b1, 15'b2, 15"c-15"e), à condition que l'autre extrémité de l'élément de réduction de couple (16, 16"") / autre élément de réduction de couple (17, 17"") fait saillie, dans un plan perpendiculaire à la direction de déplacement (VR), par rapport à un côté de l'élément de fixation (14a, 15"a) en direction de la paroi latérale (2a) autour d'un renflement (16b3), de telle sorte que, lorsque l'élément de fixation (14a, 15"a) est en état fixé, le renflement (16b3) soit pressé contre la paroi latérale (2a) et que le dispositif de support (14-14", 15-15") est contraint afin d'augmenter la rigidité du dispositif de soutien (14-14", 15-15").

2. Dispositif selon la revendication 1, dans lequel l'élément de réduction de couple (16, 16"", 17, 17"") présente une longueur (16L) d'une extrémité à l'autre qui est suffisante pour réduire la rotation du bras (14b1, 14b2, 14c ; 15"b1, 15'b2, 15"c-15"e) exercé à cause du couple sur le bras (14b1, 14b2, 14c ; 15"b1, 15'b2, 15"c-15"e) de telle sorte que tout repliement ou pivotement du bras (14b1, 14b2, 14c ; 15"b1, 15'b2, 15"c-15"e) autour du point de fixation (FP) soit exclu.

3. Dispositif selon la revendication 2, dans lequel l'élément de réduction de rotation (16, 16"", 17, 17"") présente une longueur (16L) d'une extrémité à l'autre qui est suffisante pour empêcher la rotation du bras (14b1, 14b2, 14c ; 15"b1, 15'b2, 15"c-15"e) exercé à cause du couple sur le bras (14b1, 14b2, 14c ; 15"b1, 15'b2, 15"c-15"e) de telle sorte que le repliement ou le pivotement du bras (14b1, 14b2, 14c ; 15"b1, 15'b2, 15"c-15"e) autour d'un premier axe de pivotement (D1), qui est perpendiculaire à la paroi latérale (2a) et qui comprend le point de fixation (FP), et/ou autour d'un deuxième axe de pivotement (D2), qui se trouve dans un plan de la paroi latérale (2a) et qui comprend le point de fixation (FP), soit exclu.

4. Dispositif selon l'une des revendications précédentes, dans lequel l'élément de réduction de rotation (16, 16"", 17, 17"") est réalisé sous la forme d'une aile de support de forme allongée, sous forme de corps plein ou de corps creux, en particulier avec un profilé tubulaire.

5. Dispositif selon l'une des revendications précédentes, dans lequel, lorsque l'élément de fixation (14a, 15"a) est en état fixé, l'élément de réduction de rotation (16, 16"") s'étend essentiellement dans la direction de déplacement (VR) à partir du bras (14b1, 14b2, 14c; 15"b1, 15'b2, 15"c-15"e) et/ou un autre élément de réduction de rotation (17, 17"") s'étend dans une direction sensiblement opposée à la direction de déplacement (VR) à partir du bras (14b1, 14b2, 14c; 15"b1, 15'b2, 15"c-15"e).

6. Dispositif selon l'une des revendications précédentes, dans lequel, lorsque l'élément de fixation (14a, 15"a) est en état fixé, une extrémité de l'élément de réduction de rotation (16, 16"") / autre élément de réduction de rotation (17, 17"") est reliée avec une partie d'extrémité du bras (14b1, 14b2, 14c; 15"b1, 15'b2, 15"c-15"e), en particulier de l'élément d'appui (14b1, 14b2; 15"b1, 15"b2) du bras (14b1, 14b2, 14c ; 15"b1, 15'b2, 15"c-15"e).

7. Dispositif selon l'une des revendications précédentes, dans lequel, lorsque l'élément de fixation (14a, 15"a) est en état fixé, l'élément de réduction de rotation (16, 16"") / un autre élément de réduction de rotation (17, 17"") présente, sur un côté de l'élément de réduction de rotation (16, 16"") / d'un autre élément de réduction de rotation (17, 17"") présente un évidement (17e) de telle sorte qu'une cale (17f), en particulier une cale en bois, puisse être disposée entre l'élément de réduction de rotation (16, 16ʺʺ) / autre élément de réduction de rotation (17, 17ʺʺ) et la paroi latérale (2a) puisse être positionnée au moins partiellement en étant guidée par l'évidement (17e), de telle sorte que, lorsque l'élément de fixation (14a, 15''a), la cale (17f) soit pressée contre la paroi latérale (2a) afin de contrer le dispositif de soutien (14-14'', 15-15‴) pour augmenter la rigidité de ce dernier.

8. Dispositif selon l'une des revendications précédentes, dans lequel l'élément d'appui (14b1, 14b2; 15"b1, 15"b2) du bras (14b1, 14b2, 14c; 15"b1, 15'b2, 15"c-15"e) est relié de manière pivotante à l'élément de fixation (14a, 15"a) autour d'un premier axe de rotation (14L1) sensiblement horizontal et s'étendant sensiblement parallèlement à la paroi latérale (2a), lorsque l'élément de fixation (14a, 15"a) est en état fixé.

9. Dispositif selon la revendication 8, dans lequel l'autre extrémité de l'élément de réduction de rotation (16, 16ʺʺ / de l'autre élément de réduction de rotation (17, 17ʺʺ) est formé par un élément d'appui (16b, 16ʺʺb, 17b, 17ʺʺb) avec une surface d'appui tournée vers la paroi latérale (2a) en état fixé de l'élément de fixation (14a, 15''a), à condition que la surface d'appui étant courbée dans un plan perpendiculaire à la direction de déplacement (VR), en direction de la paroi latérale (2a), de manière concentrique par rapport au premier axe de rotation (14L1) de l'élément d'appui (14b1, 14b2; 15"b1, 15"b2) du bras (14b1, 14b2, 14c; 15"b1, 15'b2, 15"c-15"e) de telle sorte que, avec une orientation essentiellement horizontale, par exemple dans uns plage angulaire de +/- 10 degrés par rapport à l'horizontale, de l'élément d'appui (14b1, 14b2; 15"b1, 15"b2) du bras (14b1, 14b2, 14c ; 15"b1, 15'b2, 15"c-15"e) et pour différents angles d'inclinaison (α), positifs ou négatifs, de la paroi latérale (2a) par rapport à la verticale dans un plan perpendiculaire à la direction de déplacement (VR), la paroi latérale (2a) forme une tangente à la surface d'appui tournée vers la paroi latérale (2a).

10. Dispositif selon la revendication 9, dans lequel la surface d'appui est dentelée, en particulier avec des dents (16b2) s'étendant le long de la direction de déplacement (VR) et orientées vers la paroi latérale (2a) lors d'un déplacement de l'élément de charge (10) reposant sur le bras (14b1, 14b2, 14c; 15"b1, 15'b2, 15"c-15"e), à condition que les dents (16b2) étant notamment conçues pour agir comme des pointes lorsqu'elles sont en contact avec la paroi latérale (2a).

11. Dispositif selon la revendication 10, dans lequel le renflement (16b3) est formé par les dents (16b2).

12. Dispositif selon l'une des revendications 9 à 11, dans lequel l'élément d'appui (16b, 16ʺʺb, 17b, 17ʺʺb) est relié, lorsque l'élément de fixation (14a, 15"a) est en état fixé, de manière à pouvoir coulisser horizontalement dans un plan perpendiculaire à la direction de déplacement (VR) avec le bras (14b1, 14b2, 14c; 15"b1, 15'b2, 15"c-15"e).

13. Dispositif selon l'une des revendications 8 à 12, dans lequel le bras (14b1, 14b2, 14c; 15"b1, 15'b2, 15"c-15"e) comprend, à côté de l'élément d'appui (14b1, 14b2 ; 15"b1, 15'b2) un premier élément de soutien (14c, 15"c), à condition que l'élément d'appui (14b1, 14b2; 15"b1, 15'b2) est à une extrémité pivotant avec l'élément de fixation (14a, 15"a) autour du premier axe de rotation (14L1) et, à l'autre extrémité, lorsque l'élément de fixation (14a, 15"a) est en état fixé, est relié de manière rotative autour d'un deuxième axe de rotation (14L2) sensiblement horizontal et s'étendant sensiblement parallèlement à la paroi latérale (2a) au premier élément de soutien (14c, 15"c), dont l'extrémité tournée vers la paroi latérale (2a) en état fixé de l'élément de fixation (14a, 15"a) est reliée de manière rotative à l'élément de fixation (14a, 15"a) autour d'un troisième axe de rotation (14L3) sensiblement horizontal et s'étendant sensiblement parallèlement à la paroi latérale (2a).

14. Dispositif selon la revendication 13, dans lequel l'élément d'appui (15"b1, 15"b2) est relié, à l'autre extrémité, lorsque l'élément de fixation (15"a) est en état fixé, de manière rotative autour du deuxième axe de rotation (14L2) - essentiellement horizontal et s'étendant essentiellement parallèlement à la paroi latérale (2a) - à un deuxième élément de soutien (15"d), dont l'extrémité opposée à l'élément d'appui (15"b1, 15"b2) est reliée, par l'intermédiaire d'un autre axe de rotation sensiblement horizontal et s'étendant sensiblement parallèlement à la paroi latérale (2a), au premier élément de soutien (15"c), à condition qu'un troisième élément de soutien (15"e) étant notamment relié, à une extrémité, à l'extrémité du deuxième élément de soutien (15"d) opposée à l'élément d'appui (15"b1, 15"b2) de l'élément de soutien (15"d) et, à son autre extrémité, au premier axe de rotation (14L1), à condition que la paroi latérale (2a) présentant notamment un angle d'inclinaison négatif (α) par rapport à la verticale.

15. Dispositif selon la revendication 13, dans lequel l'élément de soutien (14c, 15"c) est conçu comme un télescope, notamment sous la forme d'une broche ou d'un dispositif de levage, de telle sorte que, pour différents angles d'inclinaison positifs ou négatifs (α) de la paroi latérale (2a) une orientation essentiellement horizontale, par exemple dans une plage angulaire de +/- 10 degrés par rapport à l'horizontale, de l'élément d'appui (14b1, 14b2; 15"b1, 15"b2) du bras (14b1, 14b2, 14c; 15"b1, 15"b2, 15"c-15"e) soit garantie.

16. Dispositif selon l'une des revendications 1 à 15, comportant au moins deux dispositifs de soutien (15, 15'; 15", 15‴) disposés côte à côte dans la direction de déplacement, en particulier dispositif selon la revendication 15 comportant au moins deux dispositifs de soutien (15", 15‴) lorsque l'élément de fixation (15"a) est fixé au point de fixation de la paroi latérale (2a) présentant un angle d'inclinaison négatif (α) par rapport à la verticale, à condition que les dispositifs de soutien (15, 15' ; 15", 15‴) sont chacune réalisés sous la forme de consoles de dalle de chaussée qui, lorsque l'élément de fixation (14a, 15"a) est en état fixé, maintien un / l'élément de réduction de couple (16‴, 16ʺʺ) s'étendant essentiellement dans la direction de déplacement (VR) à l'opposé du bras; l'autre dispositif de support (15', 15‴) en état fixé de l'élément de fixation (14a, 15"a) maintien un autre / l'autre élément de réduction de rotation (17‴, 17ʺʺ) s'étendant à l'opposé du bras dans une direction sensiblement opposée à la direction de déplacement (VR), et les dispositifs de soutien (15, 15'; 15", 15‴) sont reliés entre eux par au moins une entretoise longitudinale (S2).

17. Dispositif de poussée cadencé comprenant au moins un agencement selon l'une des revendications 1 à 15 ou au moins un agencement selon la revendication 16, comportant deux dispositifs de soutien (15, 15' ; 15"", 15"") et d'un coffrage de dalle (10) comportant un élément porteur de peau de coffrage (6a, 6b) conçu pour former une face inférieure (3U) d'une dalle de chaussée (3), à condition que le dispositif de soutien (14-14"", 15-15") est réalisé sous la forme d'une console de dalle de chaussée et comprend, à une extrémité tournée vers le coffrage de dalle (10), une tête d'appui (20A), la tête d'appui (20A) étant reliée à l'élément d'appui (14b1, 14b2; 15"b1, 15"b2) du bras (14b1, 14b2, 14c; 15"b1, 15'b2, 15"c-15"e) et comporte un galet (50c, 50d, 50e) destiné à venir en appui contre une poutre longitudinale (4) du coffrage de dalle (10).

18. Dispositif de poussée cadencé selon la revendication 17, dans lequel le bras (14b1, 14b2, 14c; 15"b1, 15'b2, 15"c-15"e) est muni d'un dispositif d'abaissement (20c - 20e) comprenant un piston de levage (14A), une base d'appui (18) et un dispositif de blocage, le piston de levage (14A) étant monté de manière coulissante dans la base d'appui (18) et pouvant être inséré d'une position d'encoffrage (EIP) à une position de décoffrage (AUP) et peut être bloqué dans la position de travail déployée à l'aide du dispositif de blocage, à condition que le dispositif de blocage étant muni d'un palier pivotant (28) et d'un levier excentrique (16A), le levier excentrique (16A) étant monté de manière pivotante dans le palier pivotant (28) et le piston de levage (14A) et la base d'appui (18) s'appuient l'un contre l'autre dans la position de travail (voir ci-dessus) par l'intermédiaire du levier excentrique (16A), et la base d'appui (18) et/ou le piston de levage (14A) forment à une extrémité la tête d'appui (20A).

19. Procédé pour soutenir un élément de charge (10), en particulier un coffrage de dalle dans le cadre du procédé de coffrage par avancement cadencé, dans le domaine de la construction, à l'aide d'un dispositif de soutien (14-14'', 15-15‴) comprenant un élément de fixation (14a, 15''a), un bras (14b1, 14b2, 14c; 15"b1, 15'b2, 15"c-15"e) et d'au moins un élément de réduction de rotation (16, 16‴‴, 17, 17‴‴), comprenant les étapes suivantes :
- Mise en place de l'élément de fixation (14a, 15"a) contre une paroi latérale (2a), notamment une paroi latérale en béton, et fixation de l'élément de fixation (14a, 15"a) à un point de fixation (FP), notamment un point d'ancrage, de la paroi latérale (2a),
- Raccordement du bras (14b1, 14b2, 14c; 15"b1, 15'b2, 15"c-15"e) à l'élément de fixation (14a, 15''a),
- faire saillie du bras (14b1, 14b2, 14c; 15"b1, 15'b2, 15"c-15"e) de la paroi latérale (2a),
- la pose de l'élément de charge (10) sur un point d'appui (AP) d'un élément d'appui (14b1, 14b2 ; 15"b1, 15"b2) du bras (14b1, 14b2, 14c; 15"b1, 15'b2, 15"c-15"e),
- déplacement de l'élément de charge (10) dans une direction de déplacement (VR) sensiblement parallèle à la paroi latérale (2a) par rapport au bras (14b1, 14b2, 14c; 15"b1, 15'b2, 15"c-15"e),
- couplage du bras (14b1, 14b2, 14c; 15"b1, 15'b2, 15"c-15"e) avec l'élément de charge (10) de telle sorte qu'une composante de force de déplacement agisse sur le bras (14b1, 14b2, 14c; 15"b1, 15'b2, 15"c-15"e) subisse, en raison d'un déplacement de l'élément de charge (10), une composante de force de déplacement dans la direction de déplacement (VR) qui entraîne un couple sur le bras (14b1, 14b2, 14c; 15"b1, 15'b2, 15"c-15"e) avec un bras de levier (HA) s'étendant du point de fixation (FP) jusqu'au point d'appui (AP),
- raccorder une extrémité de l'élément de réduction de couple (16, 16‴‴, 17, 17ʺʺ) au bras (14b1, 14b2, 14c; 15"b1, 15'b2, 15"c-15"e), et
- l'appui d'une autre extrémité de l'élément de réduction de couple (16, 16‴‴, 17, 17ʺʺ) contre la paroi latérale (2a) afin de contrebalancer le couple exercé sur le bras (14b1, 14b2, 14c; 15"b1, 15'b2, 15"c-15"e),
- relier l'élément de réduction de couple (16, 16ʺʺ) s'étendant essentiellement dans la direction de déplacement (VR) à partir du bras (14b1, 14b2, 14c; 15"b1, 15'b2, 15"c-15"e) et/ou d'un autre élément de réduction de rotation (17, 17ʺʺ) s'étendant dans une direction sensiblement opposée à la direction de déplacement (VR) à partir du bras, avec le bras (14b1, 14b2, 14c; 15"b1, 15'b2, 15"c-15"e),
- la formation de l'autre extrémité de l'élément de réduction de rotation (16, 16ʺʺ) et/ou de l'autre élément de réduction de rotation (17, 17ʺʺ) dans un plan perpendiculaire à la direction de déplacement (VR), par rapport à un côté de l'élément de fixation (14a, 15"a) en direction de la paroi latérale (2a) de manière à faire saillie au-delà d'un renflement (16b3),
- Fixation de l'élément de fixation (14a, 15''a),
- Appuyer le ou les renflements (16b3) contre la paroi latérale (2a), et
- serrage du dispositif de soutien (14-14'', 15-15‴) afin d'augmenter la rigidité du dispositif de soutien (14-14'', 15-15‴).

20. Procédé de soutien d'un élément de charge selon la revendication 19, dans lequel
- l'élément de réduction de rotation (16, 16ʺʺ) / un autre élément de réduction de rotation (17, 17ʺʺ) est pourvu d'un évidement (17e) sur un côté de l'élément de réduction de rotation (16, 16ʺʺ) tourné vers la paroi latérale (2a) / d'un autre élément de réduction de rotation (17, 17ʺʺ),
- une cale (17f), en particulier une cale en bois, est disposée entre l'élément de réduction de rotation (16, 16ʺʺ) / l'autre élément de réduction de rotation (17, 17ʺʺ) et la paroi latérale (2a), en étant guidée au moins partiellement par l'évidement, et
- la cale (17f) est pressée contre la paroi latérale (2a) afin de serrer le dispositif de soutien (14-14'', 15-15") pour augmenter la rigidité de ce dispositif de soutien (14-14'', 15-15").
